# EUROPÄISCHE PATENTSCHRIFT

(11) **EP 4 603 056 B1**
(45) Veröffentlichungstag und Bekanntmachung des Hinweises auf die Patenterteilung: **30.09.2026**
(21) Anmeldenummer: 25187709.8
(22) Anmeldetag: 10.08.2021
(51) Int. Cl.: A61C 13/00, A61C 13/271

(54) **DENTALER ROHLING UND VERFAHREN ZUR HERSTELLUNG EINER DENTALEN TEILPROTHESE**
DENTAL BLANK AND METHOD FOR PRODUCING A PARTIAL DENTAL PROSTHESIS
ÉBAUCHE DENTAIRE ET PROCÉDÉ DE FABRICATION D'UNE PROTHÈSE DENTAIRE PARTIELLE

(43) Veröffentlichungstag der Anmeldung: 20.08.2025
(62) Dokumentnummer(n) der früheren Anmeldung(en) nach Art. 76 EPÜ: 21190667.2 / 4 134 041
(73) Patentinhaber: Ivoclar Vivadent AG, 9494 Schaan (LI)
(72) Erfinder: Watzke, Ronny, 6800 Feldkirch (AT)
(74) Vertreter: Baldus, Oliver

(56) Entgegenhaltungen:
- WO-A1-2013/072287
- US-A1- 2017 056 137
- US-A1- 2018 071 063
- US-A1- 2018 104 031

## Beschreibung

Die Erfindung betrifft einen Block mit einer oberen und einer unteren Fläche gemäß dem Oberbegriff von Anspruch 1, und Verfahren zur Herstellung einer dentalen Teilprothese, gemäß dem Oberbegriff der Ansprüche 3 und 6.

Es ist seit langem bekannt, Prothesen, aber auch Zähne, aus mehreren Schichten aufzubauen. Als Beispiele hierfür seien die aus der WO 90/13268 A1 und aus der WO 91/07141 A1 bekannten Lösungen genannt.

Die Druckschrift US 2018/071063 A1 betrifft eine dentale Prothese. Ein fleischfarbener Rohling ist vom Grundaufbau her scheibenförmig und besteht aus fleischfarbenem Material. Er weist an seiner Oberseite eine Ausnehmung auf, die sich in Form eines Halbkreises erstreckt, also bogenförmig. Eine der Besonderheiten des Bogens ist die Wellenform der Unterseite der Ausnehmung, die sich in Richtung des Bogens verlaufend erstreckt.

Für Dentalprothesen ist zum einen eine gute Materialverträglichkeit und zum anderen eine schlanke Gestaltungen der Prothese oder Teilprothese wünschenswert. Um eine sichere Verankerung der Zähne in der Dentalprothese zu gewährleisten, werden diese typischerweise geklebt oder aber auch in einem Spritzgussverfahren eingebracht. Eine diesbezügliche Lösung ist aus der DE 837 288 B1 ersichtlich.

Derzeit werden für die Herstellung von derartigen Teilprothesen mehrere Verfahrensschritte benötigt. Zunächst muss Wachs-Modell erstellt werden. Anschließend wird dieses Wachs-Modell, beispielsweise in einem Gießverfahren oder über das Lost-Wax-Verfahren, durch das Prothesenmaterial ersetzt. Im Anschluss wird die Teilprothese final ausgearbeitet und poliert. Ein derartiges mehrschrittiges Verfahren ist beispielsweise aus der WO 2007/060142 A1 bekannt.

Wie beschrieben, bestehen Teilprothesen aus mehreren Teilen und unterschiedlichen Materialien. Die Größe von Teilprothesen richtet sich nach der jeweiligen Zahnsituation eines Patienten. Dies kann im Vergleich zu einer Vollprothese individuell sehr unterschiedlich sein, da jeder Patient eine unterschiedliche Anzahl und Ausdehnung von Lücken hat.

Da das Modellieren der Gingiva- und Zahnanteile in Wachs sowie das Überführen in die finale Prothese fehleranfällig und aufwendig ist, kann das Arbeiten mit mehreren Modellen sehr leicht zu Transferfehlern führen. Die Fertigung von Teilprothesen ist daher zeitintensiv und aufgrund der Vielzahl an Materialien und Arbeitsschritten sehr fehleranfällig. Daher liegt der Erfindung die Aufgabe zugrunde, einen Block mit einer oberen und einer unteren Fläche gemäß dem Oberbegriff von Anspruch 1, Verfahren zur Herstellung einer dentalen Teilprothese gemäß dem Oberbegriff der Ansprüche 3 und 6 zu schaffen, die zum einen preisgünstig und schnell zu fertigen ist und zum anderen eine geringere Fehleranfälligkeit aufweist und auch hinsichtlich der Lagerhaltungsmöglichkeiten optimiert ist.

Diese Aufgabe wird erfindungsgemäß durch Anspruch 1, 3, oder 6 gelöst. Vorteilhafte Weiterbildungen ergeben sich aus den Unteransprüchen.

Erfindungsgemäß ist es vorgesehen, dass die Teilprothese aus einem besonders gestalteten Rohling oder Block gefertigt wird. Der Rohling ist zweifarbig gestaltet und besteht aus einem Zahnfleisch-farbenen (rosa bis rötlichen) Material und einem Zahn-farbenen (weißlich bis beigen) Material, insbesondere je auf Kunststoffbasis oder aus einem keramischen Material, welche in einer erfindungsgemäßen Form miteinander verbunden sind. Diese intensive Verbindung kann beispielsweise durch Kleben oder aber auch durch Polymerisieren erreicht werden. Auch ist es möglich, dass die beiden Materialien nur mittels einer Pressvorrichtung, wie beispielsweise einer oder mehrerer Schraubzwingen, zusammengehalten werden, aber jederzeit separiert werden können.

Die einteilige und untrennbare Herstellung kann beispielsweise dadurch erzielt werden, dass die Materialien in einem an der Grenzfläche noch weichen - oder gar flüssigen - Zustand gegen einander gepresst werden, so dass sie - mikroskopisch betrachtet - ineinander eindringen. Der Übergangsbereich ist aber auch bei dieser Art der Herstellung im

Submillimeterbereich, beispielsweise weniger als 100 µm dick. Auch beim Aufpolymerisieren besteht ein derartiger Übergangsbereich in der gleichen Größenordnung, und beim Kleben kann die Klebefuge eine geringe Stärke zwischen beispielsweise 40 und 200 µm aufweisen.

Die Materialien bestehen bevorzugt aus einem Polymer, insbesondere PMMA, jedoch sind auch andere Materialien wie beispielsweise Keramiken, insbesondere Zirkondioxid, oder Metalle denkbar. Auch ist es möglich, zwei unterschiedliche Materialien zu verwenden.

Erfindungsgemäß ist der Rohling als zweifarbiger Block oder als zweifarbige Scheibe oder als im wesentlichen scheibenförmiger, insbesondere flachzylindrischer, Rohling mit einer oberen und einer unteren Scheibenfläche gestaltet. Eine derartige zweifarbige Scheibe kann beispielsweise ein Zylinder sein, bei dem die Höhe um vieles geringer ist als der Radius. Diese Höhe des Zylinders kann sich in der Drehachse des Zylinders erstrecken und würde in der Schoenflies-Symbolik mit C∞ bezeichnet, wobei "C" zyklisch bedeutet und der Index die Zähligkeit, also hier ∞ für die Rotationssymmetrie, angibt. Die Ebene, die die Grenzfläche zwischen den beiden Materialien durchtritt, verläuft senkrecht zur Höhe, also senkrecht zur Rotationsachse des Zylinders und entspricht daher einer Rotationsfläche oder Drehfläche.

In vorteilhafter Ausführung ist ein scheibenförmiger Körper realisiert. Dieser kann rund, aber auch unrund, insbesondere mehreckig, gestaltet sein. Eine mehreckige Form lässt sich beispielsweise durch einen flachen Quader erfüllen, bei dem eine der Seiten kürzer als die anderen beiden ist. Jedoch sind auch andere, insbesondere flache, Polyeder wie ein einheitlich gleichseitiges achteckiges Antiprisma oder ein einheitlich gleichseitiges, z.B. dekagonales Antiprisma möglich.

Bei einem zweifarbigen Block, welcher beispielsweise ein Quader oder eine mehreckige Scheibe sein kann, erstreckt sich die Ebene der Grenzfläche zwischen den beiden Materialien parallel zu der Flächen des Quaders, welche den größten Flächeninhalt hat.

Die Grenzfläche zwischen den Materialien des Rohlings verläuft entlang der Ebene, muss aber nicht flach bzw. eben ausgestaltet sein. Die Ebene, in welcher die Grenzfläche liegt, ist in einer bevorzugten Ausgestaltung parallel zu einer der ggf. ebenen Scheibenflächen des Rohlings angeordnet, insbesondere zu einer derjenigen, die den größten Flächeninhalt hat. Diese Ebene kann aber auch diagonal im Rohling liegen. Wenn die Scheibenflächen nicht eben sind, sondern z.B. gewölbt oder strukturiert, kann sich die Ebene im wesentlichen parallel oder parallel zu einem Teil der Scheibenfläche erstrecken. Es ist auch möglich, dass die Ebene gebogen verläuft, insbesondere entsprechend der Spee-Kurve.

Das fleischfarbene Material kann beispielsweise an der Grenzfläche Erhöhungen und Vertiefungen aufweisen, welche jeweils aus der Ebene hinausragen. Die Erhöhungen und Vertiefungen sind je, insbesondere mindestens teilweise, umlaufend oder gebogen in der Grenzfläche zwischen den Materialien ausgebildet, also spiral- oder ringförmig. Der Verlauf der Erhöhungen und Vertiefungen ist insofern so gewählt, dass der sich um einen inneren Bereich oder den Mittelpunkt des Rohlings erstreckt. Es ist auch möglich, eine teilumlaufende Erstreckung vorzusehen, z. B. über weniger als 360 Grad, oder eine mehrfachumlaufende, also z.B. über 1800 Grad, also 5 Umdrehungen.

Jedes beliebige Ausmass des Umlaufens ist möglich.

Jede der Teilprothesen wird bevorzugt aus einem Bereich des Rohlings herausgearbeitet, insbesondere herausgefräst, der sich über eine oder mehrere Erhöhungen und Vertiefungen erstreckt. Dieser Bereich kann jedoch auch entlang einer Linie verlaufen, so dass die herausgearbeitete bzw. herausgefräste Teilprothese eine durch den Verlauf der Erhöhungen und Vertiefungen vorgegebene Krümmung aufweist. Der Scheitel einer Vertiefung oder einer Erhöhung bildet eine Linie mit einem Radius r, von einem inneren Bereich des scheibenförmigen Rohlings, insbesondere von dessen Mittelpunkt, ausgehend betrachtet. Diese Linie kann in Form einer arithmetischen oder logarithmischen Spirale verlaufen, oder auch einen oder mehrere Kreise ausbilden.

Die Form der Teilprothese selbst kann in beliebiger geeigneter Weise gewählt werden. Bevorzugt ist sie gebogen, entsprechend dem menschlichen Zahnbogen,

Die Erstreckung der Teilprothese ist bevorzugt quer zur peripher (teil-)umlaufenden Erstreckung der Erhebungen und Vertiefungen, also auch der Scheitel der Erhöhungen. Bezogen auf einen scheibenförmigen Rohling kann die Teilprothese sich im wesentlichen radial erstrecken, aber auch etwas schräg zum Radius, z.B. um +/- 20 Grad vom Radius abweichend.

Spiralen lassen sich mathematisch als Koordinatengleichungen im ebenen Polarkoordinatensystem beschreiben, wobei der Radius r als Funktion r(ϕ) von ϕ dargestellt wird; ϕ läuft im Allgemeinen bis unendlich anstatt nur bis 2π. Im vorliegenden Fall sind aber nur eine endliche Werte möglich. Auch negative Winkel sind möglich. Die allgemeine Polardarstellung einer Spirale lautet: $r = r \left(φ\right)$

Im x/y-Koordinatensystem werden dadurch Punkte mit der Parameterdarstellung $x = r \left(φ\right) cos φ$ $y = r \left(φ\right) sin φ$ beschrieben, wobei r der Radius und ϕ der Drehwinkel sind. Im Speziellen wird eine arithmetische Spirale mit der Gleichung $r = a φ$ beschrieben, wobei a eine natürliche Zahl 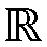 und ϕ der Drehwinkel ist. Die Polardarstellung einer logarithmischen Spirale lautet: $r = a {e}^{kφ} ,$ wobei a und k je eine natürliche Zahl 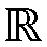 und ϕ der Drehwinkel ist.

Werden die Parameter der Polardarstellung einer Spirale r = r(ϕ) passend festgelegt, also wenn ϕ konstant gehalten wird, so erhält man einen Kreis mit der Gleichung $r = a ,$ wobei r der Radius und ϕ der Drehwinkel sind. Im x/y-Koordinatensystem lautet die Gleichung dann ${r}^{2} = {x}^{2} + {y}^{2}$

Bevorzugt weist das zahnfarbene Material an der Grenzfläche zwischen den beiden Materialien exakt die Negativform zum fleischfarbenen Material auf. Somit weist die Grenzfläche zwischen den Materialien ringförmige Erhöhungen und Vertiefungen auf, so dass die beiden Materialien ineinander greifen und gleichsam miteinander verzahnt sind. Z.B. kann das fleischfarbene Material auf das zahnfarbene Material aufpolymerisiert werden. In einer weiteren Ausführungsform befindet sich zwischen den beiden Materialien eine Schicht aus Klebemasse, Füge- oder Verbundmaterial, um die beidem Materialien fest zu verbinden. Auch ist es ggf. besonders günstig, die beiden Materialien über additive Verfahren oder durch Aufpressen oder andere Verbindungstechniken zu verbinden.

In einer bevorzugten Ausführungsform hat das Muster, also die Spirale oder der Kreis oder die Vielzahl an Kreisen seinen oder ihren gemeinsamen Mittelpunkt mit dem Mittelpunkt der Scheibe, insbesondere dem Mittelpunkt des Rohlings, gemein, weist/weisen also einen zentralen und gemeinsamen Mittelpunkt auf. Anstelle dessen ist auch möglich, exzentrische Kreise, also solche mit unterschiedlichen Mittelpunkten, zu realisieren, und/oder die Mittelpunkte dieser und/oder den Startpunkt der Spirale in einem inneren Bereich des scheibenförmigen Rohlings vorzusehen, also beispielsweise im inneren Viertel, im inneren Drittel oder in der inneren Hälfte des Rohlings.

Betrachtet man den Rohling im Querschnitt durch beide Materialien, also senkrecht zur Ebene, wobei hier angenommen wird, dass das fleischfarbene Material unten und das zahnfarbene Material oben ist und welcher Querschnitt bevorzugt durch den Mittelpunkt des Rohlings verläuft, so zeigt das fleischfarbene Material an der Grenzfläche Erhöhungen und Vertiefungen, welche bevorzugt nicht symmetrisch sind. Die Erhöhungen des fleischfarbenen Materials sind eher spitz zulaufend gestaltet, wobei die Vertiefungen des fleischfarbenen Materials eher ausgerundet sind. Insofern liegen - in der Seitenansicht betrachtet - Scheitel und sich von diesen nach unten wegerstreckende Schrägflächen, die Hänge bilden und in Tälern auslaufen. Diese Gestaltung entspricht im Wesentlichen dem menschlichen Zahnfleischsaum, der durch eine Aneinanderreihung von Us oder eine Kettenlinie gebildet ist.

Das zahnfarbene Material zeigt in diesem Querschnitt an der Grenzfläche zwischen den beiden Materialien exakt die Negativform zum fleischfarbenen Material. Dies unterstützt die Festigkeit und Widerstandsfähigkeit der Verbindung, insbesondere einer Klebefuge, zwischen den beiden Materialien gegen darauf wirkende Kräfte, beispielsweise bei der weiteren Verarbeitung des Rohlings, aber auch bei der alltäglichen Benutzung der finalen Teilprothese.

In einer bevorzugten Ausgestaltungsform werden die Erhöhungen und Vertiefungen vom Mittelpunkt aus nach Außen hin breiter und auch höher. Die Ringe verlaufen also im Querschnitt vom inneren Bereich des Rohlings oder vom Mittelpunkt zum Rand hin mit einer sich ändernden Amplitude und/oder Frequenz. Teilprothesen, die im äußeren Bereich des Rohlings herausgearbeitet, insbesondere gefräst werden, weisen somit automatisch größere Dimensionen auf als Teilprothesen, welche nahe des Mittelpunktes des Rohlings herausgearbeitet, insbesondere gefräst werden. Es ist aber auch möglich, innen die Dentalrestaurationsteile für Molaren und außen die für Prämolaren vorzusehen, also insofern die Größenverteilung umzukehren. Typischerweise werden häufiger Molaren und Prämolaren als Eckzähne und Schneidezähne benötigt, und erfindungsgemäß bietet der äußere Bereich des scheibenförmigen Rohlings mehr Raum für die Anordnung der Molaren und Prämolaren, was insofern mit dem Bedarf harmoniert.

In einer weiteren erfindungsgemäßen Ausgestaltungsform ist es vorgesehen, das zahnfarbene Material mit einem Farbverlauf zu gestalten. Hierbei ist es vorgesehen, dass an der Grenzfläche zwischen den beiden Materialien ein dunklerer Farbton für das zahnfarbene Material gewählt wird und sich der Farbton so ändert, dass er sich mit zunehmendem Abstand zum fleischfarben Material aufhellt.

In einer weiteren Ausgestaltungsform ist die Grenzfläche zwischen den Materialien des Rohlings in Form von konzentrischen Kreisen, vergleichbar mit dem Muster, welches ein Tropfen erzeugt, wenn er in eine Flüssigkeit fällt, ausgestaltet. Der Radius der jeweiligen ringförmigen Erhöhungen und Vertiefungen nimmt vom Mittelpunk nach außen, also in Richtung Rand des Rohlings, zu. Weiterhin besteht die Möglichkeit, dass die Ringe vom Mittelpunkt nach außen größer, und bevorzugt breiter, werden. Es ist auch möglich, dass die Ringe nahe des Mittelpunktes enger zusammen und nach außen hin graduell weiter auseinander liegen, also der Abstand zwischen den Ringen vom Mittelpunkt nach außen graduell zunimmt. In einer weiteren Ausgestaltungsform werden die Erhöhungen und Vertiefungen von innen nach außen breiter und/oder höher.

In einer weiteren Ausgestaltungsform ist die Grenzfläche zwischen den Materialien des Rohlings spiralförmig und dreidimensional ausgestaltet. Dies bedeutet, dass angefangen am Mittelpunkt sich die Erhöhungen und Vertiefungen spiralförmig nach außen, also Richtung Rand des Rohling, erstrecken. Weiterhin besteht die Möglichkeit, dass die von den Erhöhungen und Vertiefungen insofern gebildete Spirale, also auch die Erhöhungen und Vertiefungen an sich, vom Mittelpunkt nach Außen größer, also bevorzugt breiter und/ oder höher, wird. Diese Ausgestaltung kann mit einem Ammoniten oder einem Schneckenhaus verglichen werden. Als mathematische Gleichung würde man dieses Muster am besten mit einer logarithmischen Spirale in Polarkoordinaten (r(ϕ), ϕ) beschreiben. Für a, $k ∈ ℝ$ beschreibt die Gleichung $r \left(φ\right) = a {e}^{kφ} , φ ∈ ℝ$ eine Funktion r:R → R, und mittels der Polarkoordinateninterpretation eine logarithmische Spirale in der euklidischen Ebene. Der Parameter k wird als Steigung der Spirale bezeichnet. Das k kann auch durch tan α ausgedrückt werden, wobei dann α ∈]-π/2, π/2[ der Steigungswinkel genannt wird. In kartesischen Koordinaten ergibt sich: $x \left(φ\right) = r \left(φ\right) cos φ = a {e}^{kφ} cos φ$ $y \left(φ\right) = r \left(φ\right) sin φ = a {e}^{kφ} sin φ$

In einer weiteren Ausgestaltungsform ist der Mittelpunkt des Musters an der Grenzfläche zwischen den Materialien des Rohlings nicht zentral, stimmt also nicht mit dem Mittelpunkt der Grenzflächen-Ebene überein. Er ist vielmehr in dieser Ebene verschoben. Die Ringe können davon unbeeinflusst bleiben, so dass es sich bei dieser Ausgestaltungsform lediglich um eine Verschiebung handelt. Jedoch kann das Verschieben des Mittelpunktes auch eine Stauchung der Ringe auf der einen Seite sowie eine simultane Streckung auf der gegenüber liegenden Seite mit sich bringen. Bei dieser Ausführungsform wird die Breite der Erhöhungen und Vertiefungen automatisch verändert, deren Höhe jedoch kann sich ändern oder aber auch gleich bleiben.

In einer weiteren Ausgestaltungsform sind die spiralförmige Linie oder die konzentrischen Kreise gewellt bzw. geschwungen. Auch eine gezackte Ausgestaltung oder eine Kombination von Zacken und Wellen wäre denkbar. Die spiralförmige Linie oder die konzentrischen Kreise, entlang welcher die Scheitel der Erhöhungen bzw. Vertiefungen eines Materials verlaufen, kann also in der Ebene, in der die jeweilige Linie liegt, nach seitlich weisende - also in Richtung Mittelpunkt und/oder Rand des Rohlings zeigende - Wellen oder Zacken aufweisen. Dadurch kann der Rohling noch näher an die Geometrie natürlicher Zähne angepasst werden.

Erfindungsgemäß kann aus einem Rohling eine Vielzahl an Teilprothesen, auch für unterschiedliche Patienten, präzise und ohne die Verwendung von (Wachs-)Modellen hergestellt werden. Dies gewährleistet somit den Ausschluss von Transferfehlern und gleichzeitig optimale Materialeigenschaften.

Erfindungsgemäß ist durch den zweifarbig gestalteten Rohling ein Zusammenfügen zwischen Gingivabereich und Zahnanteil nicht mehr nötig.

Durch die erfindungsgemäß bevorzugte Ausgestaltung, nämlich durch die intensive Verbindung des zahnfarbenen und des fleischfarbenen Materials des Rohlings ergibt sich der Vorteil, dass die Fräsarbeiten wesentlich schneller vonstattengehen können. Zum Bearbeitungsvorgang beider Materialien ist lediglich ein Einspannen erforderlich. Aufgrund der intensiven Verbindung zwischen dem zahnfarbenen und dem fleischfarbenen Material und aufgrund des Formschlusses zwischen diesen, reicht die Festigkeit der Verbindung überraschend auch für die Fräsbearbeitung und die dort eingebrachten Kräfte aus.

Besonders günstig ist es, dass die einteilige Prothese durch einen mechanischen Bearbeitungsvorgang, insbesondere durch Fräsen in einer CAD/CAM-Einheit, unter Einbindung einer Steuervorrichtung automatisch fertiggestellt werden kann. Mit dieser Steuervorrichtung lässt sich die genaue Lage der Teilprothese im Rohling automatisch und/oder benutzergesteuert festlegen.

Eine CAD/CAM-Vorrichtung stellt die dentale Teilprothese fertig, indem sie die genaue Platzierung der Teilprothese im Rohling basierend auf patientenspezifischen Daten, insbesondere patientenspezifischen Zahngrößen und -breiten, festlegt und basierend hierauf die Prothese erzeugt. Damit wird die Größe der Teilprothese patientenspezifisch festgelegt, und es kann auch unterschiedlichen Formen des jeweiligen Zahnbogenteils Rechnung getragen werden, also beispielsweise unterschiedlichen Krümmungen unterschiedlicher Zahnbögen, also insofern unterschiedlicher Zahnverläufe. Die Bereitstellung der erforderlichen Patientendaten erfolgt folgendermaßen:
Zunächst wird mittels eines herkömmlichen Intraoralscans oder einer Abdrucknahme mit anschließendem 3D-Scan dieser die Zahnsituation des Patienten aufgenommen und der Steuervorrichtung zugeleitet. Diese markiert anatomisch relevante Punkte beziehungsweise anatomische Punkte im relevanten Bereich für die spätere Teilprothese.

Diese Punkte dienen als Referenzpunkte. Weiterhin legt die Steuervorrichtung basierend auf der von einer Scanvorrichtung erfassten Mundsituation eines Patienten individuelle Zahnformen, die Rotation und/oder die Angulation der Zähne und die Form der Basis der Teilprothese fest.

Diese Daten werden der Software der CAD/CAM-Vorrichtung zugeleitet. Zunächst werden hierzu die Daten der Ober- und Unterkiefermodelle importiert und lagerichtig zueinander positioniert. Mit deren Grundlage können alle Anteile einer Teilprothese, wie Modellgussgerüst, Halteelemente, Gingivabereich und Zähne, berechnet werden. Die Modellation des Übergangs von Gingiva und Zahn ist durch die erfindungsgemäße Gestaltung des Rohlings vereinfacht und bedarf keiner aufwendigen Wachs-Modelle und keinem aufwendigem Zusammen-Fügen. Anschließend erstellt die CAD/CAM-Vorrichtung automatisch mit ihrer Steuervorrichtung einen Vorschlag für eine Teilprothese, eine sogenannte virtuelle Teilprothese und gibt einen Vorschlag ab, an welcher Stelle des Rohlings diese optimalerweise hergestellt werden könnte. Die virtuelle Teilprothese und auch die vorgeschlagene Platzierung sind aber vom Benutzer, also z.B. vom Zahntechniker, an der CAD/CAM-Vorrichtung abänderbar.

Nach Fertigstellung des CAD/CAM-Modells der Teilprothese wird das fertige Design in unterschiedliche Exports gesplittet. Diese sind zum einen CAD/CAM-Datensätze für das Gerüst und die zugehörigen Halteelemente, welche aus Metall oder anderen Werkstoffen additiv (z.B. Lasermelting) oder subtraktiv (z.B. Fräsen) gefertigt werden können. Zum anderen handelt es sich um CAD/CAM-Datensätze für die fleischfarbene Anteile (Gingivaanteile) und für die Zahnanteile, welche anschließend auf eine einfache Weise aus den erfindungsgemäßen Rohlingen gefertigt beziehungsweise gefräst werden können. Aufgrund des Designs der Rohlinge können mehrere Gingiva- und Zahnanteile beziehungsweise mehrere Datensätze auch unterschiedlicher Patienten aus einem Rohling gefertigt werden.

In einer bevorzugten Ausgestaltung ist jeder Rohling mit einem individuellen Identifizierungsmerkmal, wie beispielsweise einem QR-Code, versehen und weist weiterhin Referenzpunkte auf, welche eine exakte Positionierung in der CAD/CAM-Vorrichtung erlauben. Alternativ ist auch die Realisierung mittels eines RFID-Chips hierzu möglich. Dies gilt überraschend auch, wenn der Rohling aus der Vorrichtung entfernt und später erneut eingespannt wird. Nachdem eine Teilprothese, aus dem Rohling hergestellt wurde, speichert sich die Steuervorrichtung die exakte Position der bearbeiteten Stelle des Rohlings mit Hilfe der Referenzpunkte am Rohling sowie dem individuellen Identifizierungsmerkmal des Rohlings. Somit weiß die Steuervorrichtung automatisch, auf welchem Rohling welcher Bereich noch unbenutzt ist und schlägt für eine virtuelle Teilprothese automatisch einen passenden Rohling sowie eine optimale Platzierung auf diesem vor.

Es ist auch möglich, die CAM-Daten von bereits gefertigten Rohlingen für das Nesting zu verwenden. Ferner ist es möglich, eine Kamera in der Fräsmaschine vorzusehen, die auf den zu bearbeitenden, ggf. teilgefrästen, Rohling gerichtet ist und per Bilderkennung Informationen über die zur Verfügung stehenden Bereiche des Rohlings liefert.

Auch ist es möglich, dass die Steuervorrichtung ein sogenanntes Nesting mehrerer virtueller Teilprothesen auf einem oder mehreren Rohlingen vornimmt, so dass eine optimale Materialausnutzung erreicht wird. Hierzu nimmt die Steuervorrichtung eine Positionsoptimierung für die jeweiligen virtuellen Teilprothesen vor und berücksichtigt hierbei insbesondere auch schon teilbearbeitete Rohlinge. Ist eine optimale Platzierung nicht möglich, oder liegen nicht mehr ausreichend neue Rohlinge vor, gibt die Software ein entsprechendes Warnsignal ab.

Hat die Steuervorrichtung eine optimale Platzierung ermittelt, schlägt sie diese dem Benutzer, beispielsweise mittels eines Pop-Up Fensters, vor, so dass dieser diese bestätigen kann. Es ist aber auch möglich, die Platzierung automatisch an die CAD/CAM-Vorrichtung weiter zu geben, ohne eine Bestätigung des Benutzers zu benötigen. Hierbei werden die ermittelten Daten automatisch zur Weiterbearbeitung freigegeben und für die Erzeugung der Teilprothese einer Fräsmaschine der CAD/CAM-Vorrichtung zugeleitet, in die ein zweifarbiger erfindungsgemäßer Rohling, insbesondere ein zweifarbiger, bereits teilbearbeiteter Rohling, eingespannt ist oder wird und die erwünschte Teilprothese herstellt.

In einer modifizierten Ausgestaltung ist es vorgesehen, dass beim Fräsvorgang Verbindungs-Stege zwischen der herzustellenden Teilprothese und dem restlichen Rohling verbleiben, so dass ein Herausfallen der Teilprothese während des Fräsvorgangs vermieden werden kann, auch wenn der Rohling im dreidimensionalen Raum rotiert oder gekippt werden sollte. Dies erlaubt es jegliche herkömmliche Fräsmaschinen für einen erfindungsgemäßen Rohling zu verwenden, ohne weitere spezielle Umbauten der Fräsmaschine zu erfordern.

Durch die Steuervorrichtung lässt sich basierend auf den gewonnenen Patientendaten die individuelle Zahnform, aber auch die Rotation und die Angulation der Zähne festlegen, und ebenso die Form der Basis der Teilprothese, so dass Teilprothesen für jede erdenkliche Zahnsituation eines Patienten realisierbar sind.

Durch das zweite erfindungsgemäße Design, also das erfindungsgemäße Muster bestehend aus Erhöhungen und Vertiefungen an der Grenzfläche zwischen den Materialien, insbesondere dem Verlauf der Scheitel der Erhebungen und Vertiefungen in Form eines spiralförmigen Musters, eines Schneckenhaus-Musters oder eines Musters in Form von konzentrischen Kreisen, sind die Größen der Zahnbogenteile oder einzelnen Zähne durch das Design vorgegeben. Abhängig von den verschiedenen Radien und Abständen der sowie abhängig von der Höhe und Breite der Erhöhungen und Vertiefungen in den Rohlingen können auf eine einfache und kostengünstige Weise unterschiedliche Zahnhöhen und -breiten realisiert werden. Nahe dem Mittelpunkt können somit kleine Zahnbogenteile oder Zähne realisiert werden, da dort die Radien der konzentrischen Kreise oder der Spirale klein sind und die "Kreise" oder die Windungen der Spirale nahe zusammen liegen. Auch können die Erhöhungen und Vertiefungen weniger stark ausgebildet sein als im äußeren Bereich eines erfindungsgemäßen Rohlings. Dort ist es insofern günstig große Zahnbogenteile oder Zähne zu realisieren. Somit sind viele klinische Situationen, wie beispielsweise unterschiedliche Schaltlückenlängen, unterschiedliche Zahngrößen und unterschiedliche Zahnsegmente, bei Teilprothesen individuell und monolithisch aus einem Rohling-Block oder einer Rohling-Scheibe fertigbar, so dass mit diesen Rohlingen sowie einem automatisierten Fertigungsverfahren der Herstellungsprozess von Teilprothesen deutlich vereinfacht werden kann.

Eine erfinderischen Grenzfläche zwischen den Materialien kann auch in Form einer Doppel-Spirale ausgebildet sein. In dieser Ausgestaltung ist der Verlauf der Erhöhungen, insbesondere der Verlauf des Scheitels der Erhöhungen, des fleischfarbenen Materials als erste Spirale ausgebildet. Der Verlauf der Vertiefungen, insbesondere der Verlauf des Scheitels der Vertiefungen, des fleischfarbenen Materials ist als zweite Spirale ausgearbeitet. Diese beiden Spiralen liegen somit, bevorzugt um den gleichen Wert versetzt, oberhalb beziehungsweise unterhalb der Ebene der Grenzfläche zwischen den Materialien des Rohlings.

Bei dieser Ausgestaltung verläuft somit die erste Spirale bei fertig gefräster Teilprothese, zwischen den Zähnen und die zweite Spirale legt den Bereich des jeweiligen Zahnes fest, welcher in der fertiggestellten Teilprothese die höchste Höhe aufweist. Bevorzugt konvergieren die beiden Spiralen an einem gewissen Punkt, insbesondere dem Mittelpunkt, zueinander. Weiterhin ist der Abstand zwischen den beiden Spiralen im inneren Bereich des Rohlings geringer als im Randbereich des Rohlings und nimmt bevorzugt konstant von Innen nach Außen zu.

In einer weiteren Ausgestaltung ist es vorgesehen, dass die Ebene der Grenzfläche zwischen den Materialien des Rohlings selbst nicht eben ist, sondern eine Wölbung aufweist. Die Grenzfläche zwischen den Materialien des Rohlings kann in diesem Fall mit einem Gewölbe, einem Kegel oder einer Pyramide vergleichen werden. Der Verlauf der Erhöhungen und/oder Vertiefungen des fleischfarbenen Materials kann auch bei einer derartigen Ausbildung der Grenzfläche in allen oben beschriebenen Ausgestaltungen, wie beispielsweise einer logarithmischen Spirale oder konzentrischer Kreise, erfolgen.

Im Fall einer derartig gewölbten Grenzfläche in Kombination mit einer spiralförmigen Ausgestaltung des Verlaufs der Erhöhungen und/oder Vertiefungen des fleischfarbenen Materials kann die Ausgestaltung der Grenzfläche mit der Oberseite eines Schneckenhauses verglichen werden.

Auch können verschieden große Rohlinge, also Rohlinge mit unterschiedlichen Gesamt-Großen, vergleichbar mit Konfektionsgrößen wie beispielsweise "L", "M" oder "S", realisiert werden.

Besonders vorteilhaft ist es, dass durch die erfindungsgemäße ringförmige Gestaltung und die im Querschnitt abwechselnden Erhöhungen und Vertiefungen bei der fertig gestellten Teilprothese jede Erhöhung des zahnfarbenen Materials der Sichtkante des Zahns an seinem Zahnhals gegenüber der von dem fleischfarbenen Material gebildeten Gingiva folgt. Die Ähnlichkeit zu natürlichen Zähnen und Zahnfleisch ergibt sich überraschend einfach, indem das fleischfarbene Material, insbesondere durch Fräsen, mindestens teilweise so weit abgetragen ist, dass an der Vestibulärseite die Trennlinie zwischen dem ballig gefrästen zahnfarbenen und fleischfarbenen Materialien als Gingivalinie zurückspringt, und zwar insbesondere sowohl gegenüber dem fleischfarbenen als auch den zahnfarbenen Material im Übrigen. Somit ist die fertiggestellte Teilprothese kaum von den umliegenden Zähnen zu unterscheiden.

Durch die erfindungsgemäße Gestaltung der Grenzfläche zwischen dem zahnfarbenen und dem fleischfarbenen Material lassen sich mehrere Teilprothesen unterschiedlichster (Zahn-)Größen aus einem Rohling herstellen. Je kleiner die Zähne sein müssen, insbesondere auch Teilprothesen für Kinder oder Jugendliche, desto näher am Mittelpunkt des erfindungsgemäßen Rohlings wird diese Teilprothese positioniert, da dort das Muster enger und die Höhe und Breite der Erhöhungen und Vertiefungen weniger stark ausgeprägt sind als am Rande des Rohlings. Wird eine ungleichmäßige Zahngröße benötigt, um beispielsweise einen Übergang von Backen- zu Schneidezähnen zu realisieren, kann die virtuelle Teilprothese auch schräg, also radial, im Rohling angeordnet werden. Sollten extrem große Zahngrößen realisiert werden, wird bevorzugt am äußeren Rand des Rohlings gearbeitet. Überraschend ist es hierdurch möglich, ästhetisch besonders gelungene Prothesen auch bei sehr unterschiedlichen Größen der Zähne bereitzustellen.

Erfindungsgemäß ist es besonders günstig, dass bei diesem Herstellungsprozess die einzelnen Zähne einer Teilprothese über Verbindungsstellen aus zahnfarbenem Material miteinander verbunden bleiben. Hierdurch ist es überraschend möglich, im Vergleich zu herkömmlichen Teilprothesen, welche konventionelle Einzelzähne in eine Basis einkleben, die Widerstandsfähigkeit gegenüber Kaukräften, also insbesondere gegenüber seitlichen Scherkräften zu verbessern.

Nach einer abschließenden Politur kann die fertige Teilprothese an den Zahnarzt zur Eingliederung geliefert werden.

Während einzeln gefertigte und konfektionierte Zähne typischerweise in Zahnkavitäten in einer gemäß dem Stand der Technik gefertigten Prothesenbasis aufgenommen sind und aufgrund der Hebelwirkung der Kaukräfte bei der Mastikation erheblichen Scherbelastungen unterworfen sind, die auch die Klebefläche stark belasten, ist es erfindungsgemäß vorgesehen, diese Scherkräfte über die erfindungsgemäße Gestaltung der Teilprothese, insbesondere der besonderen Gestaltung der Grenzfläche zwischen zahnfarbenem und fleischfarbenem Material, und der Verbindung der Zähne zu einer sich über die ganze Teilprothese erstreckende Brücke, zu minimieren. Erfindungsgemäß ist die gefürchtete Lockerung der Klebung des Einzelzahns eliminiert, denn die Verbindung von mindestens zwei benachbarten Zähne der Teilprothesen zeigt aufgrund der vergrößerten Verbundfläche bei der Mastikation geringere Scherbelastungen.

Die fleischfarbenen und zahnfarbenen Materialien sind erfindungsgemäß intensiv miteinander verbunden, sei es durch Kleben, sei es durch Polymerisieren, oder aber auch durch eine einteilige Herstellung.

Bei zweiteiliger Herstellung ist es günstig, dass die beiden Materialien zu einem beliebigen Zeitpunkt und auch in beliebiger Selektion zueinander passend miteinander verbunden werden können. Hierbei können die einzelnen Teile auch zueinander passende geometrische Formen, sogenannte Positionierungselemente, aufweisen. Diese können an der virtuellen Teilprothese, entweder von CAD/CAM-Vorrichtung mit ihrer Steuervorrichtung automatisch vorgeschlagen und platziert werden oder vom Benutzer, also z.B. vom Zahntechniker, an der CAD/CAM-Vorrichtung festgelegt werden.

Das erfindungsgemäße erste oder "Wave-Drop"-Design weist ein Muster an der Grenzfläche zwischen den Materialien in Form von konzentrischen Kreisen auf, wodurch die Größen der Zahnbogenteile oder einzelnen Zähne durch das Design vorgegeben werden. Diese Ausgestaltung des Musters an der Grenzfläche zwischen den beiden Materialien ist vergleichbar mit dem Wellen-Muster, das ein Wassertropfen erzeugt, wenn er auf eine Wasseroberfläche trifft.

Auch ist ein Muster erfindungsgemäß möglich, bei welchem die Abstände zwischen den Kreisen zum Rand der Grenzfläche hin zunehmen oder welches aus Kreisen besteht, bei denen der Mittelpunkt des innersten Kreises zum Rand der Grenzfläche hin verschoben ist und die Abstände zwischen den Kreisen in diese Richtung "gestaucht" in der anderen Richtung "gestreckt" sind.

Das erfindungsgemäße zweite oder "Snail-Shell"-Design weist ein spiralförmiges Muster an der Grenzfläche zwischen den Materialien auf. Diese Spiral-Linie kann arithmetisch oder aber auch logarithmisch, also vergleichbar mit dem Muster eines Schneckenhauses, sein.

Der erfindungsgemäße Rohling erlaubt es somit auf eine einfache und kostengünstige Weise, eine Teilprothese nach patientenspezifischen Bedürfnissen herzustellen, ohne auf aufwendige Wachsmodelle zurückgreifen zu müssen. Somit werden Transferfehler von vorn herein vermieden und der Herstellungsprozess optimiert.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1a: einen schematischen Schnitt durch einen erfindungsgemäß hergestellten Teilprotheseanteil respektive Zahn-/Gingiva-Teil, bestehend aus einem zahnfleischfarbenen und einem zahnfarbenen Material in einer ersten Ausführungsform;
- Fig. 1b: einen schematischen Schnitt durch einen erfindungsgemäß hergestellten Teilprothesenanteil respektive Zahn-/Gingiva-Teil, bestehend aus einem zahnfleischfarbenen und einem zahnfarbenen Material in einer weiteren Ausführungsform;
- Fig. 2: schematische Darstellungen möglicher Ausgestaltungsformen der erfinderischen Grenzfläche zwischen dem zahnfarbenen und dem fleischfarbenen Material;
- Fig. 2a: schematische Darstellungen einer ersten Ausgestaltungsform der erfinderischen Grenzfläche zwischen dem zahnfarbenen und dem fleischfarbenen Material;
- Fig. 2b: schematische Darstellungen einer weiteren Ausgestaltungsform der erfinderischen Grenzfläche zwischen dem zahnfarbenen und dem fleischfarbenen Material;
- Fig. 2c: schematische Darstellungen einer weiteren Ausgestaltungsform der erfinderischen Grenzfläche zwischen dem zahnfarbenen und dem fleischfarbenen Material und mögliche Positionierungen von Zähnen unterschiedlicher Größe;
- Fig. 2d: schematische Darstellungen einer weiteren Ausgestaltungsform der erfinderischen Grenzfläche zwischen dem zahnfarbenen und dem fleischfarbenen Material;
- Fig. 2e: schematische Darstellungen einer weiteren Ausgestaltungsform der erfinderischen Grenzfläche zwischen dem zahnfarbenen und dem fleischfarbenen Material;
- Fig. 2f: schematische Darstellungen einer weiteren Ausgestaltungsform der erfinderischen Grenzfläche zwischen dem zahnfarbenen und dem fleischfarbenen Material und mögliche Positionierungen von Zähnen unterschiedlicher Größe;
- Fig. 3: schematische Darstellungen möglicher Ausgestaltungsform der erfinderischen Grenzfläche zwischen dem zahnfarbenen und dem fleischfarbenen Material und mögliche Positionierungen von Zähnen unterschiedlicher Größe;
- Fig. 3a: schematische Darstellungen einer ersten Ausgestaltungsform der erfinderischen Grenzfläche zwischen dem zahnfarbenen und dem fleischfarbenen Material und mögliche Positionierungen von Zähnen unterschiedlicher Größe;
- Fig. 3b: schematische Darstellungen einer weiteren Ausgestaltungsform der erfinderischen Grenzfläche zwischen dem zahnfarbenen und dem fleischfarbenen Material und mögliche Positionierungen von Zähnen unterschiedlicher Größe;
- Fig. 3c: schematische Darstellungen einer weiteren Ausgestaltungsform der erfinderischen Grenzfläche zwischen dem zahnfarbenen und dem fleischfarbenen Material und mögliche Positionierungen von Zähnen unterschiedlicher Größe;
- Fig. 4: einen schematischen Schnitt durch einen erfindungsgemäßen Rohling in perspektivischer Ansicht in möglichen Ausführungsformen;
- Fig. 4a: einen schematischen Schnitt durch einen erfindungsgemäßen Rohling in perspektivischer Ansicht in einer ersten Ausführungsform;
- Fig. 4b: einen schematischen Schnitt durch einen erfindungsgemäßen Rohling in perspektivischer Ansicht in einer weiteren Ausführungsform;
- Fig. 5: schematische Schnitte durch erfindungsgemäße Rohlinge in perspektivischer Ansicht in möglichen Ausführungsformen mit möglichen Platzierungen verschiedenener virtueller Teilprothesen;
- Fig. 5a: schematischer Schnitt durch erfindungsgemäßen Rohling in perspektivischer Ansicht in einer ersten Ausführungsform mit möglicher Platzierung einer virtuellen Unterkiefer-Frontzahn-Teilprothese;
- Fig. 5b: schematischer Schnitt durch erfindungsgemäßen Rohling in perspektivischer Ansicht in einer weiteren Ausführungsform mit möglicher Platzierung einer virtuellen Oberkiefer-Frontzahn-Teilprothese;
- Fig. 5c: schematischer Schnitt durch erfindungsgemäßen Rohling in perspektivischer Ansicht in einer weiteren Ausführungsform mit möglicher Platzierung eines virtuellen Oberkiefer- und Unterkiefer-Frontzahn Teilprothesenanteils;
- Fig. 5d: schematischer Schnitt durch erfindungsgemäßen Rohling in perspektivischer Ansicht in einer weiteren Ausführungsform mit möglicher Platzierung mehrerer virtueller Oberkiefer- und Unterkiefer-Frontzahn Teilprothesenanteile;
- Fig. 6: schematische Darstellungen möglicher Ausgestaltungsformen eines erfindungsgemäßen Seitenzahn-Rohlings in Aufsicht und mögliche Positionierungen von Teilprothesen unterschiedlicher Größe;
- Fig. 6a: schematische Darstellungen einer ersten Ausgestaltungsform eines erfindungsgemäßen Seitenzahn-Rohlings in Aufsicht und mögliche Positionierungen von Teilprothesen unterschiedlicher Größe;
- Fig. 6b: schematische Darstellungen einer weiteren Ausgestaltungsform eines erfindungsgemäßen Seitenzahn-Rohlings der Grösse "L" in Aufsicht und mögliche Positionierungen von Teilprothesen unterschiedlicher Größe;
- Fig. 6c: schematische Darstellungen einer weiteren Ausgestaltungsform eines erfindungsgemäßen Seitenzahn-Rohlings der Grösse "M" in Aufsicht und mögliche Positionierungen von Teilprothesen unterschiedlicher Größe;;;
- Fig. 6d: schematische Darstellungen einer weiteren Ausgestaltungsform eines erfindungsgemäßen Seitenzahn-Rohlings der Grösse "S" in Aufsicht und mögliche Positionierungen von Teilprothesen unterschiedlicher Größe;
- Fig. 7: schematische Darstellungen möglicher Ausgestaltungsformen eines erfindungsgemäßen Frontzahn-Rohlings in Aufsicht und mögliche Positionierungen von Teilprothesen unterschiedlicher Größe;
- Fig. 7a: schematische Darstellungen einer ersten Ausgestaltungsform eines erfindungsgemäßen Frontzahn-Rohlings in Aufsicht und mögliche Positionierungen von Teilprothesen unterschiedlicher Größe;
- Fig. 7b: schematische Darstellungen einer weiteren Ausgestaltungsform eines erfindungsgemäßen Frontzahn-Rohlings der Grösse "L" in Aufsicht und mögliche Positionierung eines Frontzahnteilprothesenbogens;
- Fig. 7c: schematische Darstellungen einer weiteren Ausgestaltungsform eines erfindungsgemäßen Frontzahn-Rohlings der Grösse "M" in Aufsicht und mögliche Positionierung eines Frontzahnteilprothesenbogens;
- Fig. 7d: schematische Darstellungen einer weiteren Ausgestaltungsform eines erfindungsgemäßen Frontzahn-Rohlings der Grösse "S" in Aufsicht und mögliche Positionierung eines Frontzahnteilprothesenbogens;
- Fig. 8: schematische Darstellungen möglicher Ausgestaltungsformen eines erfindungsgemäßen Seitenzahn-Rohlings in Aufsicht und mögliche Positionierungen von Teilprothesen unterschiedlicher Größe;
- Fig. 8a: schematische Darstellung einer ersten Ausgestaltungsform eines erfindungsgemäßen Seitenzahn-Rohlings der Grösse "L" in Aufsicht und mögliche Positionierungen von Teilprothesen unterschiedlicher Patientendaten;
- Fig. 8b: schematische Darstellung einer weiteren Ausgestaltungsform eines erfindungsgemäßen Seitenzahn-Rohlings der Grösse "M" in Aufsicht und mögliche Positionierungen von Teilprothesen unterschiedlicher Patientendaten;
- Fig. 8c: schematische Darstellung einer weiteren Ausgestaltungsform eines erfindungsgemäßen Seitenzahn-Rohlings der Grösse "S" in Aufsicht und mögliche Positionierungen von Teilprothesen unterschiedlicher Patientendaten;
- Fig. 8d: schematische Darstellung einer weiteren Ausgestaltungsform eines erfindungsgemäßen Seitenzahn-Rohlings in Aufsicht und mögliche Positionierungen von Teilprothesen unterschiedlicher Größe;
- Fig. 8e: schematische Darstellung einer weiteren Ausgestaltungsform eines erfindungsgemäßen Seitenzahn-Rohlings in Aufsicht und mögliche Positionierungen von Teilprothesen unterschiedlicher Größe in Relation zu einem erfindungsgemässen Scheibenförmigen Rohlings
- Fig. 9: schematische Darstellung einer Ausgestaltungsform eines erfindungsgemäßen Scheibenförmigen Rohlings in Aufsicht und mögliche Positionierungen von Teilprothesen unterschiedlicher Größe.

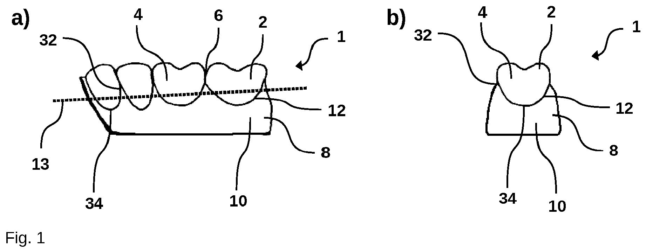

Fig. 1a und b zeigen einen schematischen Schnitt durch einen erfindungsgemäßen Zahn-/Gingiva-Teil 1. Hierbei bestehen die Zähne 2 aus zahnfarbenem Material 4 und der Gingiva-Teil 8 aus fleischfarbenem Material 10. Die beiden Materialien sind an deren Grenzfläche 12 intensiv miteinander verbunden, insbesondere aneinander anpolymerisiert oder verklebt. Fig. 1a zeigt einen mehrteiligen, hier einen viergliedrigen, Zahn-/Gingiva-Teil, wobei die Zähne 2 durch Verbindungsstellen 6 miteinander verbundenen sein können und Fig. 1b einen einteiligen Zahn-/Gingiva-Teil, eine sogenannte Einzelzahn-Prothese.

Die Zahn-/Gingiva-Teile 1 wie sie in den Fig. 1 dargestellt sind - werden aus einem flachzylindrischen oder scheibenförmigen, zweifarbigen Rohling hergestellt. Dieser ist beispielsweise scheibenförmig ausgestaltet, wobei die, die Grenzfläche 12 durchtretende Ebene 13 zwischen den beiden Materialien senkrecht zur Höhe, und damit senkrecht zur Rotationsachse C∞ der Scheibe verläuft. In Fig. 1a ist die Ebene 13 in der Seitenperspektive dargestellt. Entgegen der Darstellung in Fig. 1a kann die Ebene 13 auch schräg oder auch gebogen verlaufen. Der Rohling kann aber auch blockförmig ausgestaltet sein. Hierbei verläuft die, die Grenzfläche 12 durchtretende Ebene 13 zwischen den beiden Materialien bevorzugt horizontal im flach liegenden Rohling. In einer anderen Ausgestaltungsform ist eine schräg im Rohling verlaufende, die Grenzfläche 12 durchtretende Ebene 13 und somit auch eine schräg im Rohling verlaufende Grenzfläche 12 realisiert.

Die Grenzfläche 12 zwischen den Materialien des Rohlings weist eine Abfolge von je ringförmigen Erhöhungen 32 und Vertiefungen 34 auf, welche insbesondere ihre Mittelpunkte mit dem Mittelpunkt der Ebene gemein haben können und jeweils aus der Ebene hinausragen. Das zahnfarbene Material 4 weist an der Grenzfläche 12 zwischen den beiden Materialien exakt die Negativform zum fleischfarbenen Material 10 auf. Somit weist die Grenzfläche 12 zwischen den Materialien ringförmige Erhöhungen 32 und Vertiefungen 34 auf, wobei die beiden Materialien ineinander greifen. Zwischen diesen erstrecken sich Übergänge, die Schrägflächen oder gleichsam Hänge bilden. Betrachtet man den Rohling im Querschnitt durch beide Materialien, also senkrecht zur Ebene der Grenzfläche 12, wobei hier angenommen wird, dass das fleischfarbene Material 10 unten und das zahnfarbene Material 4 oben ist und welcher Querschnitt bevorzugt durch den Mittelpunkt des Rohlings verläuft, so sind die Erhöhungen 32 und Vertiefungen 34 des fleischfarbenen Materials 10 an der Grenzfläche 12, also bei einer Spiegelung an der Ebene 13, nicht symmetrisch. Die Erhöhungen 32 sind vielmehr eher spitz zulaufend, wobei die Vertiefungen 34 eher ausgerundet sind. Diese Gestaltung der Grenzfläche 12 entspricht dem menschlichen Zahnfleischsaum und ist daher in der Seitenansicht kettenlinienförmig und kann mit einer Aneinanderreihung von Us verglichen werden.

Das Ineinandergreifen unterstützt die Festigkeit und Widerstandsfähigkeit der Verbindung des zahnfarbenen Materials 4 mit dem fleischfarben Material 10, insbesondere bei einer Verbindung über eine Klebefuge, gegen darauf wirkende Kräfte, beispielsweise bei der weiteren Verarbeitung des Rohlings, aber auch bei der alltäglichen Benutzung der finalen Teilprothese. Die Asymmetrie der Grenzfläche hingegen erlaubt eine einfache Herstellung von Zahn-/Gingiva-Teile 1, welche besonders natürlich wirken, da die spitz zulaufenden Erhöhungen 32 des fleischfarbenen Materials 10 automatisch dem natürlichen Verlauf des Zahnfleischs im Zwischenzahnbereich gleichen. Die ausgerundeten Vertiefungen 34 des fleischfarbenen Materials 10, also in der Negativform die ausgerundeten Erhöhungen des zahnfarbenen Materials 4, geben die natürliche Zahnform vor. Um eine natürliche Anmutung zu erreichen, müssen die Zahn-/Gingiva-Teile 1 somit nur an optimalen Stellen aus dem Rohling gefräst werden, wobei als finale Nachbearbeitung nur ein Schlichtfräsen des Zahnfleischsaums am Übergangsbereich zwischen fleischfarbenem und zahnfarbenem Material (4, 10) nötig ist.

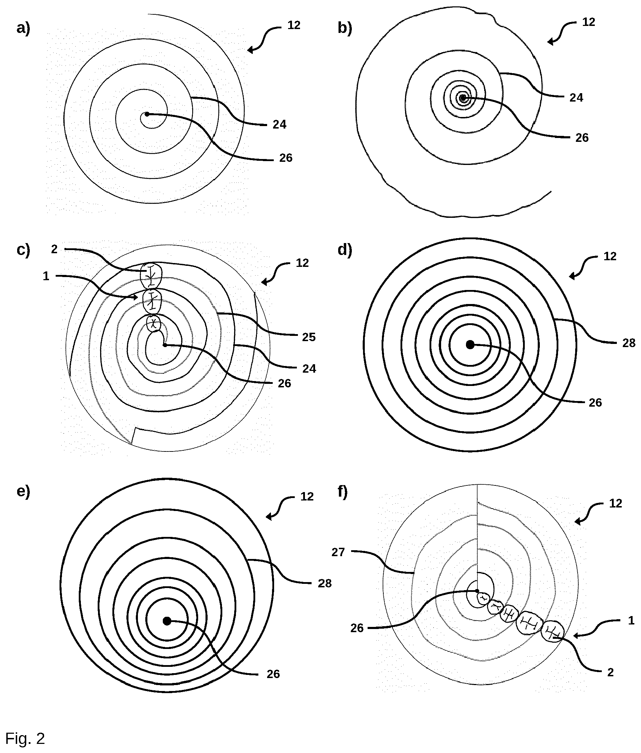

Fig. 2a, b, c und d zeigen schematische Darstellungen möglicher Ausgestaltungsformen der erfinderischen Grenzfläche 12 zwischen dem zahnfarbenen Material 4 und dem fleischfarbenen Material 10.

Fig. 2a und 2b zeigen die schematische Darstellung einer erfinderischen Grenzfläche 12 zwischen den Materialien 4 und 10, die hierbei ein Linienmuster in Form von einer arithmetischen ( Fig. 2a) oder einer logarithmischen ( Fig. 2b) Spirale zeigt. Die Darstellung in Fig. 2b kann mit der Gehäuseform eines Ammoniten oder eines Schneckenhauses verglichen werden. Die Spirale 24, welche sich von einem bestimmten Punkt 26, insbesondere dem Mittelpunkt der Ebene 13 in welcher die Grenzfläche 12 liegt, nach außen, also Richtung Rand des Rohling, windet. Die Erhöhungen 32 des fleischfarbenen Materials verlaufen hierbei entlang der Linien der Spirale 24 und die Vertiefungen 34 des fleischfarbenen Materials 10 zwischen den Linien. Weiterhin besteht die Möglichkeit, dass die Erhöhungen 32 und die Vertiefungen 34 des fleischfarbenen Materials 10 vom Mittelpunkt 26 nach außen größer und/oder breiter werden. Fig. 2b zeigt einen leicht gewellten Verlauf der Spirallinie, also eine Spiral-Linie 24, die nicht perfekt geometrisch verläuft. Dies erlaubt es auf eine einfache Weise, weitere Größenvariationen der herzustellenden Zahn-/Gingiva-Teile 1 zu ermöglichen und insbesondere unregelmässige Abweichungen der Zahngrößen im Verlauf einer Teilprothese - wie es bei natürlichen Zähnen durchaus oft der Fall ist - zu realisieren.

Fig. 2c zeigt die schematische Darstellung einer erfinderischen Grenzfläche 12 zwischen den Materialien 4 und 10, wobei in dieser Ausgestaltungsform der Verlauf der Erhöhungen 32, insbesondere der Verlauf des Scheitels der Erhöhungen 32, des fleischfarbenen Materials 10 anhand von einer durchgezogenen Linie 24 dargestellt ist und der Verlauf der Vertiefungen 34, insbesondere der Verlauf des Scheitelpunkts der Vertiefungen 34, des fleischfarbenen Materials 10 als gestrichelte graue Linie 25. Hierbei ist dargestellt, wie ein beispielhafter Zahn-/Gingiva-Teil 1, welcher in diesem Fall beispielhaft drei Zähne 2 umfasst, in dem Rohling angeordnet sein kann. Die Linie 24, welche den Verlauf der Erhöhungen 32, insbesondere der Verlauf des Scheitels der Erhöhungen 32, des fleischfarbenen Materials 10 wiedergibt, verläuft somit zwischen den Zähnen 2 des Zahn-/Gingiva-Teils 1. Die Linie 25, welche den Verlauf der Vertiefungen 34, insbesondere der Verlauf des Scheitels der Vertiefungen 34, des fleischfarbenen Materials 10 wiedergibt, legt den Bereich des jeweiligen Zahnes fest, welcher in der fertiggestellten Teilprothese die höchste Höhe aufweist.

Weiterhin erlauben die Linien 24 und 25 es auf eine einfache Weise, die Kettenlinie bzw. die U's so auszugestalten bzw. zu designen, dass die Gestalt, insbesondere die Gigivalinie, des menschlichen Zahnfleisches nahezu naturgetreu nachempfunden wird.

Fig. 2d zeigt die schematische Darstellung einer erfinderischen Grenzfläche 12 zwischen den Materialien 4 und 10, die hier in Form von konzentrischen Kreisen 28 um einen gemeinsamen Mittelpunkt 26 ausgestaltet ist. Dies ist vergleichbar mit dem Muster, welches ein Tropfen erzeugt, der in eine Flüssigkeit fällt. Die Erhöhungen 32 des fleischfarbenen Materials verlaufen hierbei entlang der Linien der dargestellten konzentrischen Kreise 28 und die Vertiefungen 34 des fleischfarbenen Materials zwischen den Linien. Weiterhin besteht die Möglichkeit, dass der Abstand zwischen zwei Kreisen mit zunehmendem Abstand vom Mittelpunkt 26 graduell zunimmt und auch die Erhöhungen 32 und Vertiefungen 34 entlang bzw. zwischen den Kreisen, nach außen hin graduell größer und/oder breiter werden.

Fig. 2e zeigt die schematische Darstellung einer erfinderischen Grenzfläche 12 zwischen den Materialien 4 und 10, die hier in Form von gestauchten Kreisen 28 um einen Mittelpunkt 26 des innersten Kreises ausgestaltet ist, wobei der Mittelpunkt hierbei nicht im Zentrum der Grenzfläche liegt, sondern zu einem Rand des Rohlings hin verschoben ist.

Fig. 2f zeigt die schematische Darstellung einer erfinderischen Grenzfläche 12 zwischen den Materialien 4 und 10, die hier in Form von mehreren geschwungenen Linien 27 um einen zentralen Punkt 26 des Rohlings ausgestaltet ist, wobei sich hier die geschwungenen Linien 27 weder zu Kreisen verbinden, noch eine vollständige Spirale über die gesamte Grenzfläche 12 des Rohlings ausbilden.

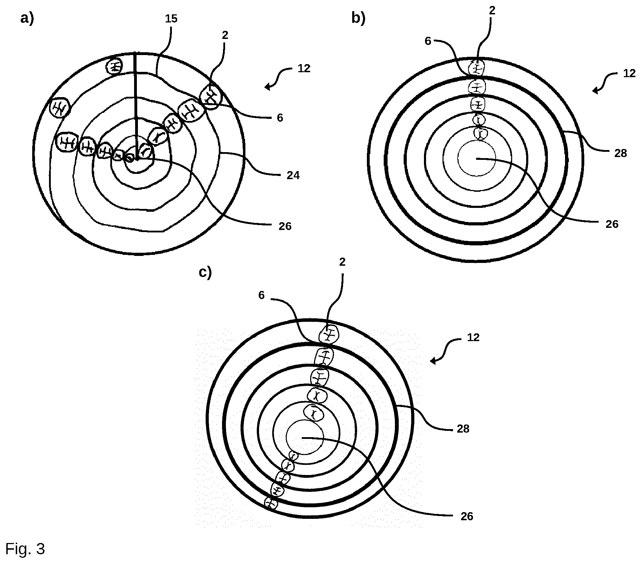

Die Fig. 3 a bis c zeigen die analogen schematischen Darstellungen möglicher Ausgestaltungsformen zu den Fig. 2 a bis c , wobei hier nun mögliche Positionierungen von Zähnen 2 in die Darstellung der Grenzschicht 12 eingezeichnet sind.

Fig. 3a zeigt eine Spiral-Linie 24, welche den Verlauf der Maxima der Erhöhungen 32 aufzeigt. Diese Spiral-Linie 24 kann beispielsweise eine arithmetische oder logarithmische Spirale sein. Weiterhin ist es auch erfindungsgemäß möglich, dass die Spiral-Linie 24 nicht perfekt geometrisch verläuft, sondern, wie in Fig. 3a dargestellt, leichte Wellen 15 aufweisen kann, vergleichbar mit dem gewellten Verlauf der Spiral-Linie in Fig. 2b und den gleichen Vorteilen.

In Fig. 3a und b nimmt die mögliche Zahngröße von herzustellenden Zahn-/Gingiva-Teilen vom Mittelpunkt 26 der Spiral-Linie 24 (bei Fig. 3a) bzw. der konzentrischen Kreise 28 (bei Fig. 3b) nach außen, also Richtung Rand des Rohlings, zu. Je kleiner die Zähne 2 sein müssen, desto näher am Mittelpunkt 26 des erfindungsgemäßen Rohlings werden diese positioniert, da dort das Muster enger und die Höhe und Breite der Erhöhungen 32 und Vertiefungen 34 weniger stark ausgeprägt sind als am Rande des Rohlings. Wird eine ungleichmäßige Zahngröße benötigt, um beispielsweise einen Übergang von Backen- zu Schneidezähnen zu realisieren, kann der virtuelle Zahn-/Gingiva-Teil auch schräg, also radial, im Rohling angeordnet werden. Sollten extrem große Zahngrößen realisiert werden, wird bevorzugt am äußeren Rand des Rohlings gearbeitet. Überraschend ist es hierdurch möglich, ästhetisch besonders gelungene Zahn-/Gingiva-Teile auch bei sehr unterschiedlichen Größen der Zähne 2 bereitzustellen.

Bei der Ausführungsform gemäß Fig. 3c ist der Mittelpunkt 26 nicht im Zentrum der Grenzfläche 12, sondern zu einem Rand des Rohlings hin verschoben. Hierbei können kleinere Zahngrößen insbesondere an der Seite des Mittelpunktes 26 angeordnet werden, bei der weniger Abstand zum Rand ist, also sozusagen der gestauchten Seite. Größere Zahngrößen können hingegen auf der gestreckten Seite angeordnet werden.

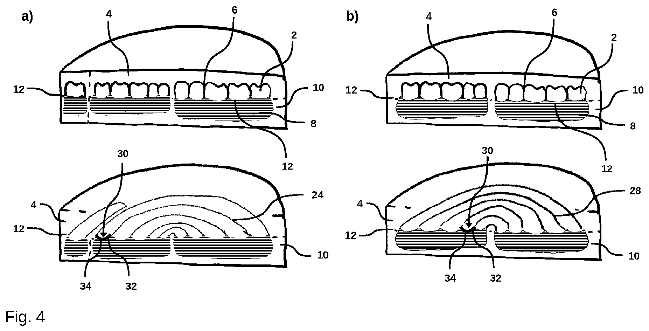

Fig. 4a und b zeigen einen schematischen Schnitt durch einen erfindungsgemäßen Rohling in perspektivischer Ansicht in je einer Ausführungsform.

In Fig. 4a ist ein schematischer Schnitt durch einen erfindungsgemäßen Rohling mit einer Ausgestaltung der Grenzfläche 12 in Form einer Spirale 24 in perspektivischer Ansicht dargestellt. In Fig. 4a oben sind mögliche Platzierungen mehrerer virtueller Zahn-/Gingiva-Teileeingezeichnet. Die, insbesondere durch Verbindungsstellen 6 verbundenen, Zähne 2 bestehen aus zahnfarbenem Material 4 und die Prothesenbasis 8 aus fleischfarbenem Material 10. Die beiden Materialien sind an deren Grenzfläche 12 intensiv miteinander verbunden, insbesondere aneinander anpolymerisiert oder verklebt.

Fig. 4a unten zeigt die Ausgestaltung und Anordnung der Grenzfläche 12 in einem erfindungsgemäßen Rohling in der Ausgestaltung einer Spirale 24 in perspektivischer Ansicht. Hierbei ist die dreidimensionale Ausgestaltung des fleischfarbenen Materials 10 an der Grenzfläche zwischen den Materialien 4 und 10 dargestellt.

Die Erhöhungen 32 und Vertiefungen 34 des fleischfarbenen Materials 10 sind ähnlich den in Fig. 2 dargestellten ausgestaltet, wobei das zahnfarbene Material 4 die Negativform für die Herstellung des fleischfarbenen Materials 10 bilden kann. In der Richtung von innen nach außen betrachtet wechseln die Erhöhungen 32 und Vertiefungen 34 des fleischfarbenen Materials 10 einander ab. Die Erhöhungen 32 bilden Scheitel, an die sich Hänge oder Schrägflächen anschließen. In dieser Sicht betrachtet bildet die Grenzfläche 12 eine Kettenlinie oder eine Aneinanderreihung von Us. In der Draufsicht betrachtet bilden die Scheitel oder Erhöhungen 32 konzentrische Kreise. Der Abstand der Kreise voneinander kann gleich sein, in der darstellten Ausführungsform ist er jedoch unterschiedlich, nämlich z.B. außen größer als innen.

In Fig. 4b ist ein schematischer Schnitt durch einen erfindungsgemäßen Rohling mit einer Ausgestaltung der Grenzfläche 12 in Form von konzentrischen Kreisen 28, analog zu Fig. 2b oder 3b , in perspektivischer Ansicht dargestellt. In Fig. 4b oben sind mögliche Platzierungen mehrerer virtueller Zahn-/Gingiva-Teile eingezeichnet. Die, insbesondere durch Verbindungsstellen 6 verbundenen, Zähne 2 bestehen aus zahnfarbenem Material 4 und die Prothesenbasis 8 aus fleischfarbenem Material 10. Die beiden Materialien sind an deren Grenzfläche 12 intensiv miteinander verbunden, insbesondere aneinander anpolymerisiert oder verklebt.

Fig. 4b unten zeigt die Ausgestaltung und Anordnung der Grenzfläche 12 in einem erfindungsgemäßen Rohling in der Ausgestaltungsform von konzentrischen Kreisen 28 in perspektivischer Ansicht. Wie auch bei Fig. 4a unten ist hier die dreidimensionale Ausgestaltung, insbesondere vergleichbar mit einer Aneinanderreihung von U's 30, des fleischfarbenen Materials 10 an der Grenzfläche zwischen den Materialien 4 und 10 dargestellt.

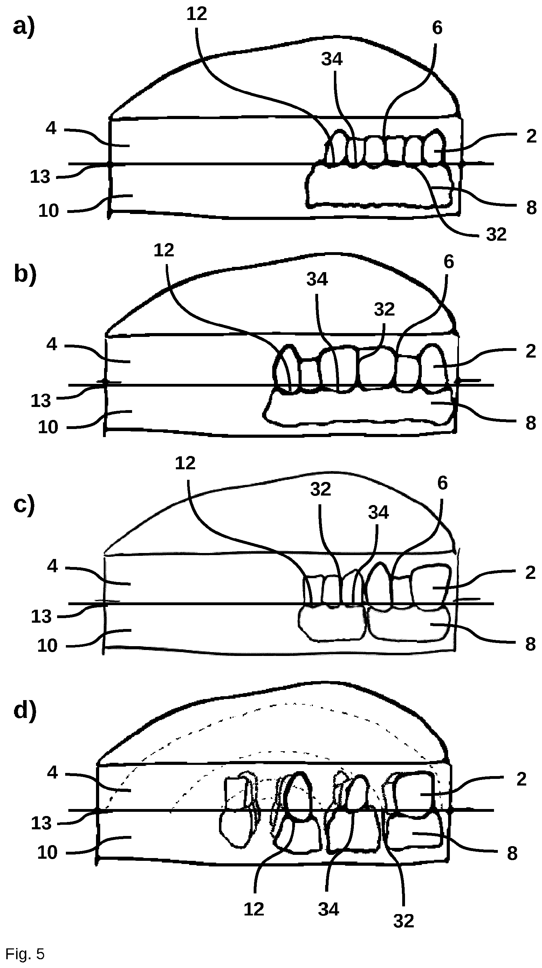

Die Fig. 5a bis d zeigen schematische Schnitte durch erfindungsgemäße Rohlinge in perspektivischer Ansicht in je einer Ausführungsform mit möglichen Platzierungen verschiedenener virtueller Teilprothesen. Fig. 5a zeigt ein Unterkieferfrontzahnsegment von Zahn 33 nach 43, Fig. 5b ein Oberkieferfrontzahnsegment von Zahn 13 nach 23 und Fig. 5c eine Disk, wobei ein Unterkieferfrontzahnsegment von Zahn 31 bis 33 und ein Oberkieferfrontzahnsegment von Zahn 23 nach 21 nebeneinander positioniert sind. Indem virtuelle Zahn-/Gingiva-Teile um 180° gedreht werden (bei Fig. 5d), können Zahnsegmente aus allen vier Frontzahnsegmenten im gleichen Rohling gefertigt werden. Dies gilt natürlich nicht nur für Frontzahnsegmente wie in Fig. 5a bis c dargestellt, sondern auch für jegliche andere erwünschte Zahnsegmente, welche aus einem Rohling gefertigt werden sollen.

In den Fig. 5a bis 5c ist die Ebene 13, in welcher die Grenzfläche 12 zwischen den Zähnen aus zahnfarbenen Material 4 und der Prothesenbasis 8 aus fleischfarben Material 10 liegt, jeweils in der Seitenperspektive als gerade Linie dargestellt.

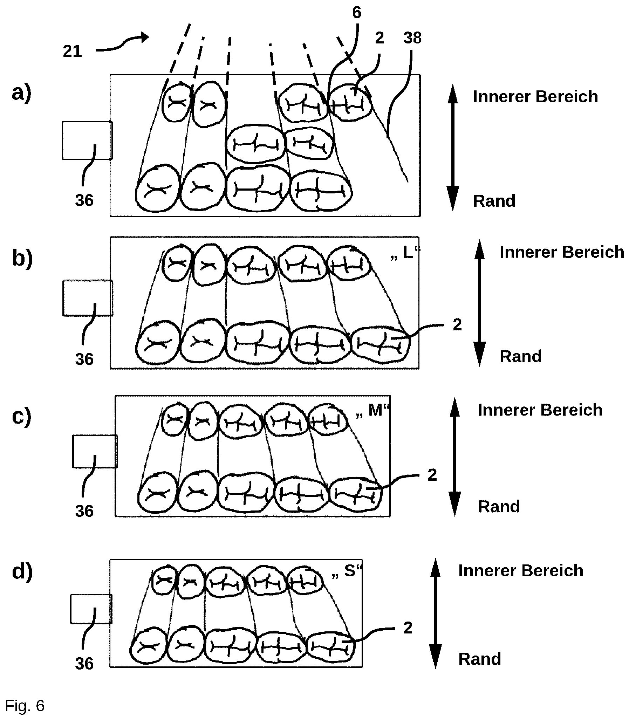

Die Fig. 6a bis d zeigen die schematische Darstellungen möglicher Ausgestaltungsformen eines erfindungsgemäßen Seitenzahn-Blocks in Aufsicht. Mögliche Positionierungen von Zähnen 2 respektive Zahn-/Gingiva-Teile, hier insbesondere von Seitenzähnen, in der Grenzschicht 12 zwischen dem zahnfarbenen Material 4 und dem fleischfarbenen Material 10 sind zweidimensional eingezeichnet. Diese Ausschnitte sind so gewählt, dass in den Abbildungen 6a bis d der Bereich des Blocks, insbesondere der Konvergenzbereich 21 in dem der Mittelpunkt des fächerförmigen Orientierungslinien 38 liegt, jeweils oberhalb und der Rand des Blocks unterhalb der Abbildung liegt. Die fächerförmig ausgerichteten Orientierungslinien 38 entsprechen den Erhebungen des fleischfarbenen Materials 34 und liegen an Verbindungsstellen 6 zwischen den einzelnen Zähnen 2, also den Papillen.

Die fächerförmigen Orientierungslinien 38 konvergieren miteinander, und der zentrale Bereich, der von den Linien gebildet wird, kann auch als Konvergenzbereich 21 bezeichnet werden. Die Ausrichtung der Orientierungslinien 38 ermöglicht die Wahl einer geeigneten Größe des Zahn-/Gingiva-Teils, je nach Platzierung im Block. Wie den Fig. 6a bis d entnommen werden kann, weisen Zahn-/Gingiva-Teile, die im oberen Bereich des Blocks herausgearbeitet, insbesondere gefräst werden, somit automatisch kleinere Dimensionen auf als Zahn-/Gingiva-Teile, welche unten herausgearbeitet, insbesondere gefräst werden. Fig. 6a bis d zeigen, dass erfindungsgemäße Block in verschiedenen Größen gefertigt werden können, um eine noch feinere Anpassbarbeit der Dimensionierungen zu erreichen. Hier ist es beispielsweise möglich, Blöcke in den Größen "L" für insgesamt sehr große Zahn-/Gingiva-Teile, "M" für durchschnittlich große Zahn-/Gingiva-Teileund "S" für insgesamt sehr kleine Zahn-/Gingiva-Teile, zu ermöglichen.

In den Fig. 6a bis d ist weiterhin ein beispielhafter Halter 36 eingezeichnet, welcher zur Einspannung des erfindungsgemäßen Blocks in der Einspann-Vorrichtung der CAD/CAM-Vorrichtung dient.

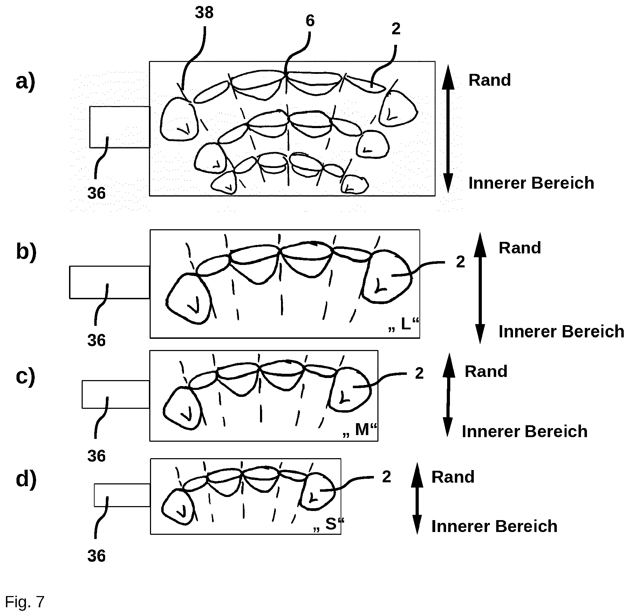

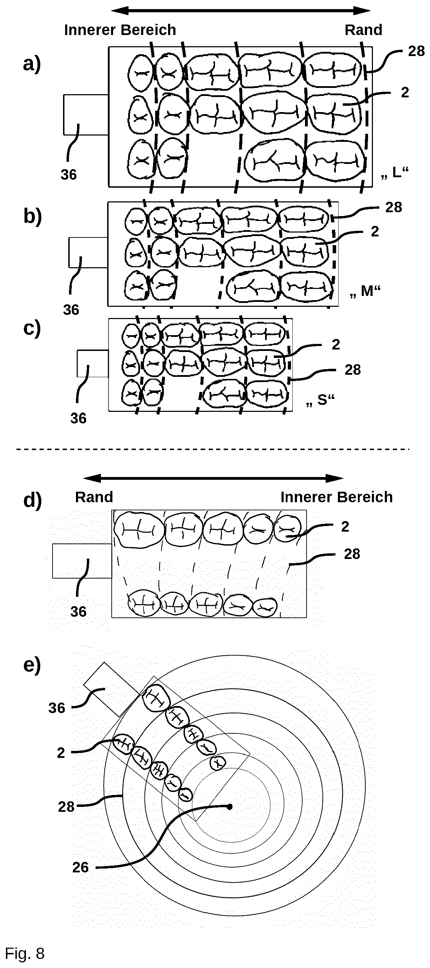

Die Fig. 7 a bis d zeigen die schematische Darstellungen möglicher Ausgestaltungen eines erfindungsgemäßen Block in Aufsicht. Mögliche Positionierungen von Zähnen 2 respektive Zahn-/Gingiva-Teile, hier insbesondere von Frontzähnen, in der Grenzschicht 12 zwischen dem zahnfarbenen Material 4 und dem fleischfarbenen Material 10 sind zweidimensional eingezeichnet. Diese Ausschnitte sind so gewählt, dass in den Abbildungen 8a bis d der Mittelpunkt jeweils unterhalb und der Rand des Blocks oberhalb der Abbildung liegt. Bei den Orientierungslinien 38, welche im Block dargestellt sind, handelt es sich somit um Ausschnitte einer gedachten Spirale oder gedachter konzentrischer Kreise, welche um einiges größer sind als der Block. Die Orientierungslinien 38 dienen dazu, die Größenzunahme des Abschnittes der Spirale 24 oder des Abschnittes der konzentrischen Kreisen 28, welche im Bereich des Blocks liegen, vom Mittelpunkt 26 nach außen hin, also in Richtung Rand des Blocks zu verdeutlichen. Wie der Fig. 7a entnommen werden kann, weisen Zahn-Gingiva-Teile die im oberen Bereich des Blocks herausgearbeitet, insbesondere gefräst werden, somit automatisch größere Dimensionen auf als Zahn-Gingiva-Teile, welche im unteren Bereich des Blocks herausgearbeitet, insbesondere gefräst werden.

Fig. 7b bis d zeigen, dass erfindungsgemäße Blöcke in verschiedenen Größen gefertigt werden können, so dass die drei dargestellten Zahn-Gingiva-Teile, welche in Fig. 7a auf einem Block Platz finden, auch auf einzelnen, im Vergleich zum Rohling-Block aus schmaleren Rohling-Blöcken gefertigt werden können.

In den Fig. 7a bis d ist weiterhin ein beispielhafter Steg 36 eingezeichnet, welcher zur Einspannung des erfindungsgemäßen Blocks in der Einspann-Vorrichtung der CAD/CAM-Vorrichtung dient.

Die Fig. 8a bis c zeigen die schematische Darstellungen möglicher Ausgestaltungen eines erfindungsgemäßen Block in Aufsicht. Mögliche Positionierungen von Zähnen 2 respektive Zahn-Gingiva-Teile, hier insbesondere von Seitenzähnen, in der Grenzschicht 12 zwischen dem zahnfarbenen Material 4 und dem fleischfarbenen Material 10 sind zweidimensional eingezeichnet. Diese Ausschnitte sind so gewählt, dass in den Abbildungen 8a bis c der Mittelpunkt jeweils auf der linken Seite und der Rand des Blocks auf der rechten Seite der Abbildung liegt. Der Verlauf der erfindungsgemäßen konzentrischen Kreise 28, welche in der erfinderischen Grenzfläche 12 zwischen den Materialien 4 und 10 liegen, ist schematisch in Form gestrichelter Linien eingezeichnet. Der gemeinsame Mittelpunkt 26 der konzentrischen Kreise 28 liegt in der Darstellung gemäß den Figuren auf der linken Seite des Rohlings. Der Abstand der konzentrischen Kreise 28 nimmt bei dieser Ausgestaltungsform von Innen, also von der Seite des Block, auf welcher der gedachte Mittelpunkt liegt, nach Außen, also in Richtung des Randes des Rohlings, zu. Wie den Fig. 8a bis c entnommen werden kann, weisen Zahn-Gingiva-Teile die im äußeren Bereich des Blocks herausgearbeitet, insbesondere gefräst werden, somit automatisch größere Dimensionen auf als Zahn-Gingiva-Teile, welche nahe des Mittelpunktes des Blocks herausgearbeitet, insbesondere gefräst werden.

Fig. 8a bis c zeigen weiterhin, dass erfindungsgemäße Blöcke in verschiedenen Größen gefertigt werden können, um eine noch feinere Anpassbarbeit der Dimensionierungen zu erreichen. Hier ist es beispielsweise denkbar, Blöcke in den Größen "L" für insgesamt sehr große Zahn-Gingiva-Teile bzw. Zahngrößen, "M" für durchschnittlich große Zahn-Gingiva-Teile bzw. Zahngrößen und **"S"** für insgesamt sehr kleine Zahn-Gingiva-Teile bzw. Zahngrößen zu ermöglichen.

In den Fig. 8a bis c ist weiterhin ein beispielhafter Steg 36 eingezeichnet, welcher zur Einspannung des erfindungsgemäßen Blocks in der Einspann-Vorrichtung der CAD/CAM-Vorrichtung dient. In dieser Ausführungsform ist dieser an der Seite angebracht, an welcher bevorzugt kleine Zahngrößen realisiert werden können, also nahe dem imaginären Mittelpunkt des Grenzfläche.

Fig. 8d in Kombination mit Fig. 8e verdeutlicht, dass der Block auch gedreht orientiert sein kann. Somit befindet sich der Steg 36, welcher zur Einspannung des erfindungsgemäßen Rohlings in der Einspann-Vorrichtung der CAD/CAM-Vorrichtung dient, in Fig. 8d auf der anderen Seite des Rohlings als es in den Fig. 8a bis c der Fall ist.

Fig. 8e zeigt beispielhaft, welcher Bereich eines virtuellen scheibenförmigen Rohlings als erfindungsgemäßer rechteckiger Block ausgebildet sein kann. Der virtuelle scheibenförmige Rohling weist hier exzentrische Kreise von Erhöhungen und Vertiefungen auf, wie es anhand von Fig. 2e oben erläutert ist. Es versteht sich, dass ein scheibenförmiger Rohling nicht real hergestellt werden muss, um den, insbesondere rechteckigen, Block daraus herauszuarbeiten, Vielmehr kann der erwünschte Bereich direkt als blockförmiger Rohling hergestellt werden. Auch in dieser Abbildung sind mögliche Platzierungen von beispielhaften Zähnen 2 respektive Zahn-Gingiva-Teile dargestellt.

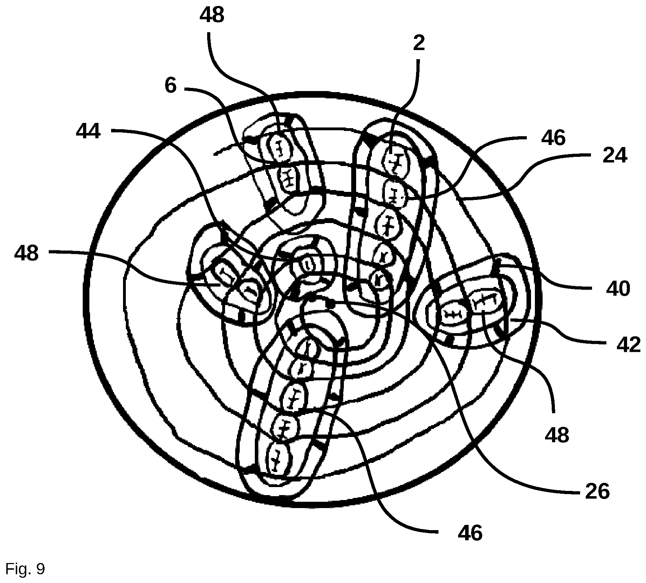

Fig. 9 zeigt eine schematische Darstellung einer möglichen Ausgestaltungsform eines erfindungsgemäßen scheibenförmigen Rohlings in Aufsicht. Es sind von der Steuervorrichtung automatisch und/oder benutzergesteuert festgelegten Lagen mehrerer Zahn-Gingiva-Teile in einem erfindungsgemäßen Rohling dargestellt. Im vorliegenden Beispiel sind diese virtuellen Zahn-Gingiva-Teile teils schräg, teils radial, im Rohling angeordnet. Hierbei sind Einzel-Zahn-Gingiva-Segmente 44 vorgesehen, Es ist jedoch auch jede andere Art von Zahn-Gingiva-Teilen möglich. In Fig. 9 sind beispielhaft zwei- (48) und fünfgliedrige (46) Zahn-Gingiva-Teile dargestellt.

Es ist vorgesehen, dass beim Fräsvorgang Verbindungs-Stege 40 zwischen der herzustellenden Zahn-Gingiva-Teilen 1 und dem restlichen Rohling, also im Bereich der gefrästen Fuge 42, verbleiben, so dass ein Herausfallen der Zahn-Gingiva-Teile 1 während des Fräsvorgangs vermieden werden kann, auch wenn der Rohling im dreidimensionalen Raum rotiert oder gekippt wird. Dies erlaubt es jegliche herkömmliche Fräsmaschinen für einen erfindungsgemäßen Rohling zu verwenden, ohne weitere spezielle Umbauten der Fräsmaschine zu erfordern.

Gemäß einem ersten Aspekt betrifft die Erfindung einen dentalen Rohling, mit einer oberen und einer unteren Fläche, der aus einem fleischfarbenen Material und einem zahnfarbenen Material, aufgebaut ist, wobei das fleischfarbene Material und das zahnfarbene Material miteinander verbunden sind und wobei die Grenzfläche zwischen den Materialien mit in oder an der Grenzfläche ausgebildeten Erhöhungen und Vertiefungen sich durch eine gegebenenfalls gebogene Ebene erstreckt, welche Ebene parallel zu oder schräg zu mindestens einem Teil der Flächen des Rohlings liegt, dadurch gekennzeichnet, dass die Erhöhungen und Vertiefungen je, insbesondere mindestens teilweise, umlaufend in der Grenzfläche zwischen den Materialien ausgebildet sind, wobei je der Scheitel einer Vertiefung und/oder einer Erhöhung mindestens eine Linie bildet, wobei die Linie entweder in Form einer oder mehrerer - arithmetischen oder logarithmischen - Spirale/n oder in Form eines oder mehrerer Kreise verläuft.

In einer technisch vorteilhaften Ausführungsform weist die Linie einen Radius r, von einem Mittelpunkt, insbesondere dem Mittelpunkt des Rohlings, ausgehend betrachtet, aufweist, wobei gilt: $r = a φ$ oder $r = a {e}^{kφ}$ oder $r = a ,$ wobei a und k je eine natürliche Zahl 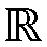 und ϕ der Drehwinkel ist.

In einer weiteren technisch vorteilhaften Ausführungsform ist der Verlauf der Vertiefungen und/oder Erhöhungen die erste Ableitung der Gleichung der Linie mit dem Radius r größer oder gleich Null und nimmt insbesondere mit zunehmendem Drehwinkel ϕ zu.

In einer weiteren technisch vorteilhaften Ausführungsform weist der Verlauf der Vertiefungen und/oder Erhöhungen die Form von konzentrischen Kreisen auf.

In einer weiteren technisch vorteilhaften Ausführungsform liegt der Verlauf der Erhöhungen und Vertiefungen nahe des Mittelpunktes des Rohlings enger zusammen und nach außen hin weiter auseinander oder der Verlauf der Erhöhungen und Vertiefungen liegt nahe des Mittelpunktes des Rohlings weiter auseinander und nach außen hin enger zusammen.

In einer weiteren technisch vorteilhaften Ausführungsform liegt der Mittelpunkt der Linie bzw. der Linien nicht zentral in der Ebene der Grenzfläche zwischen den Materialien, sondern ist leicht zu einem Rand in der Ebene der Grenzfläche verschoben ist und/oder der Verlauf der Erhöhungen und Vertiefungen auf unterschiedlichen Seiten des Mittelpunktes unterschiedliche Abstände aufweist.

In einer weiteren technisch vorteilhaften Ausführungsform ist das zahnfarbene Material, und/oder ggf. das fleischfarbene Material mit einem Farbverlauf gestaltet ist und/oder sich mit zunehmendem Abstand von der Grenzfläche zwischen den Materialien, insbesondere kontinuierlich, zunehmend transparenter ist.

Gemäß einem zweiten Aspekt betrifft die Erfindung einen Block mit einer oberen und einer unteren Fläche, der aus einem fleischfarbenen Material und einem zahnfarbenen Material aufgebaut ist, wobei das fleischfarbene Material und das zahnfarbene Material miteinander verbunden sind und wobei die Grenzfläche zwischen den Materialien mit in oder an der Grenzfläche ausgebildeten Erhöhungen und Vertiefungen sich durch eine gegebenenfalls gebogene Ebene erstreckt, welche Ebene parallel zu oder schräg zu mindestens einem Teil der Flächen des Rohlings liegt, dadurch gekennzeichnet, dass die Erhöhungen und Vertiefungen in der Draufsicht auf die Grenzfläche betrachtet entlang einer oder mehrerer Linien verlaufen, die sich quer über den Rohling erstrecken und welche eine oder mehrere Linien parallel zueinander, kreisförmig, spiralförmig oder gebogen sind.

In einer technisch vorteilhaften Ausführungsform erstrecken sich die ein oder mehreren Linien, kreisförmig oder spiralförmig und konvergieren zu einem Konvergenzbereich konvergieren.

Gemäß einem dritten Aspekt betrifft die Erfindung eine dentale Teilprothese, hergestellt aus einem Rohling nach dem ersten Aspekt oder Block nach dem zweiten Aspekt.

In einer technisch vorteilhaften Ausführungsform sind die Zähne der Teilprothese über das zahnfarbene Material unter Bildung eines Teilzahnbogens miteinander mindestens teilweise einstückig verbunden.

Gemäß einem vierten Aspekt betrifft die Erfindung ein Verfahren zur Herstellung einer dentalen Teilprothese, unter Verwendung einer CAD/CAM-Vorrichtung aus einem Rohling oder einem Block, der mit einer oberen und einer unteren Scheibenfläche gefertigt ist, der aus einem fleischfarbenen Material und einem zahnfarbenen Material, aufgebaut wird, wobei das fleischfarbene Material und das zahnfarbene Material miteinander verbunden werden und wobei die Grenzfläche zwischen den Materialien mit in der Grenzfläche ausgebildeten Erhöhungen und Vertiefungen sich durch eine Ebene erstreckt, welche Ebene parallel oder gebogen oder schräg zu einer der Scheibenflächen des Rohlings oder Blocks liegt, dadurch gekennzeichnet, dass im Rohling oder Block ein Bereich für mindestens eine Teilprothese, reserviert wird, der sich über eine oder mehrere Erhöhungen und Vertiefungen erstreckt, und dass die Erhöhungen und Vertiefungen je, insbesondere mindestens teilweise, umlaufend in der Grenzfläche zwischen den Materialien ausgebildet werden, wobei je der Scheitel einer Vertiefung und/oder einer Erhöhung mindestens eine Linie bildet, wobei die Linie entweder in Form einer oder mehrerer - arithmetischen oder logarithmischen - Spirale oder in Form eines oder mehrerer Kreise verläuft.

In einer technisch vorteilhaften Ausführungsform werden aus einem Rohling eine Vielzahl von Teilprothesen, auch für unterschiedliche Patienten, insbesondere nach einem Scannen, einem virtuelles Erstellen der Prothese und virtueller Positionierung im Rohling, hergestellt, insbesondere heraus gefräst.

In einer weiteren technisch vorteilhaften Ausführungsform weist der Rohling Referenzpunkte für die Positionierung in der CAD/CAM-Vorrichtung und/oder ein individuelles Identifizierungskennzeichen, wie beispielsweise einen QR-Code oder ein RFID-Tag, auf und/oder die Steuervorrichtung für jeden Rohling speichert sich die Position einer hergestellten Prothese speichert und für neue, herzustellende Teilprothesen wird, insbesondere durch ein "Nesting"-Verfahren, einen Rohling und/oder die Positionierung auf einem Rohling bestimmt, um eine maximale Rohstoffnutzung zu erreichen.

Gemäß einem fünften Aspekt betrifft die Erfindung ein Verfahren zur Herstellung einer dentalen Teilprothese, unter Verwendung einer CAD/CAM-Vorrichtung aus einem Rohling oder einem Block, der mit einer oberen und einer unteren Scheibenfläche gefertigt ist, der aus einem fleischfarbenen Material und einem zahnfarbenen Material, aufgebaut wird, wobei das fleischfarbene Material und das zahnfarbene Material miteinander verbunden werden und wobei die Grenzfläche zwischen den Materialien mit in der Grenzfläche ausgebildeten Erhöhungen und Vertiefungen sich durch eine Ebene erstreckt, welche Ebene parallel oder gebogen oder schräg zu einer der Scheibenflächen des Rohlings oder Blocks liegt, dadurch gekennzeichnet, dass im Rohling oder Block ein Bereich für mindestens eine Teilprothese reserviert wird, der sich über eine oder mehrere Erhöhungen und Vertiefungen erstreckt, und dass die Erhöhungen und Vertiefungen je, insbesondere mindestens teilweise, umlaufend in der Grenzfläche zwischen den Materialien ausgebildet werden, wobei je der Scheitel einer Vertiefung und/oder einer Erhöhung mindestens eine Linie bildet, wobei die Linie entweder in Form einer oder mehrerer - arithmetischen oder logarithmischen - Spirale oder in Form eines oder mehrerer Kreise verläuft und dass die CAD/CAM-Vorrichtung die Teilprothese hinsichtlich ihrer Raumform festlegt, und eine Steuervorrichtung aufweist, die in Abhängigkeit von der erwünschten Größe und Zahnbreite die Teilprothese so in dem Rohling positioniert, und insbesondere auch die individuelle Zahnform, die Rotation und/oder die Angulation der Zähne vorschlägt und - ggf. nach Benutzereingriff - festlegt.

## Patentansprüche

1. Block mit einer oberen und einer unteren Fläche, der aus einem fleischfarbenen Material (10) und einem zahnfarbenen Material (4) aufgebaut ist, wobei das fleischfarbene Material (10) und das zahnfarbene Material (4) miteinander verbunden sind und wobei die Grenzfläche (12) zwischen den Materialien mit in oder an der Grenzfläche (12) ausgebildeten Erhöhungen (32) und Vertiefungen (34) sich durch eine gegebenenfalls gebogene Ebene (13) erstreckt, welche Ebene (13) parallel zu oder schräg zu mindestens einem Teil der Flächen des Blocks liegt, **dadurch gekennzeichnet, dass** die Erhöhungen (32) und Vertiefungen (34) in der Draufsicht auf die Grenzfläche (12) betrachtet entlang einer oder mehrerer Linien (24, 25) verlaufen, die sich quer über den Block erstrecken und welche eine oder mehrere Linien (24, 25) kreisförmig oder spiralförmig sind.

2. Block nach Anspruch 1, **dadurch gekennzeichnet, dass** sich die ein oder mehreren Linien (24, 25) zu einem Konvergenzbereich konvergieren.

3. Verfahren zur Herstellung einer dentalen Teilprothese, unter Verwendung einer CAD/CAM-Vorrichtung aus einem Block, der mit einer oberen und einer unteren Scheibenfläche gefertigt ist, der aus einem fleischfarbenen Material (10) und einem zahnfarbenen Material (4), aufgebaut wird, wobei das fleischfarbene Material (10) und das zahnfarbene Material (4) miteinander verbunden werden und wobei die Grenzfläche (12) zwischen den Materialien mit in der Grenzfläche (12) ausgebildeten Erhöhungen (32) und Vertiefungen (34) sich durch eine Ebene (13) erstreckt, welche Ebene (13) parallel oder gebogen oder schräg zu einer der Scheibenflächen des Blocks liegt, **dadurch gekennzeichnet, dass** im Block ein Bereich für mindestens eine Teilprothese, reserviert wird, der sich über eine oder mehrere Erhöhungen (32) und Vertiefungen (34) erstreckt, und dass die Erhöhungen (32) und Vertiefungen (34) je, insbesondere mindestens teilweise, umlaufend in der Grenzfläche (12) zwischen den Materialien ausgebildet werden, wobei je der Scheitel einer Vertiefung (34) und/oder einer Erhöhung (32) mindestens eine Linie (24, 25) bildet, und die Linie (24, 25) kreisförmig oder spiralförmig ist.

4. Verfahren zur Herstellung einer dentalen Teilprothese nach Anspruch 3, **dadurch gekennzeichnet, dass** aus dem Block eine Vielzahl von Teilprothesen, auch für unterschiedliche Patienten, insbesondere nach einem Scannen, einem virtuelles Erstellen der Prothese und virtueller Positionierung im Block, hergestellt, insbesondere heraus gefräst, werden.

5. Verfahren zur Herstellung einer dentalen Teilprothese nach einem der Ansprüche 3 oder 4, **dadurch gekennzeichnet, dass** der Block Referenzpunkte für die Positionierung in der CAD/CAM-Vorrichtung und/oder ein individuelles Identifizierungskennzeichen, wie beispielsweise einen QR-Code oder ein RFID-Tag, aufweist und/oder dass sich die Steuervorrichtung für jeden Block die Position einer hergestellten Prothese speichert und für neue, herzustellende Teilprothesen, insbesondere durch ein "Nesting"-Verfahren, einen Block und/oder die Positionierung auf einem Block bestimmt, um eine maximale Rohstoffnutzung zu erreichen.

6. Verfahren zur Herstellung einer dentalen Teilprothese, unter Verwendung einer CAD/CAM-Vorrichtung, einem Block, der mit einer oberen und einer unteren Scheibenfläche gefertigt ist, der aus einem fleischfarbenen Material (10) und einem zahnfarbenen Material (4), aufgebaut wird, wobei das fleischfarbene Material (10) und das zahnfarbene Material (4) miteinander verbunden werden und wobei die Grenzfläche (12) zwischen den Materialien mit in der Grenzfläche (12) ausgebildeten Erhöhungen (32) und Vertiefungen (34) sich durch eine Ebene (13) erstreckt, welche Ebene (13) parallel oder gebogen oder schräg zu einer der Scheibenflächen des Blocks liegt, **dadurch gekennzeichnet, dass** im Block ein Bereich für mindestens eine Teilprothese reserviert wird, der sich über eine oder mehrere Erhöhungen (32) und Vertiefungen (34) erstreckt, und dass die Erhöhungen (32) und Vertiefungen (34) je, insbesondere mindestens teilweise, umlaufend in der Grenzfläche (12) zwischen den Materialien ausgebildet werden, wobei je der Scheitel einer Vertiefung (34) und/oder einer Erhöhung (32) mindestens eine Linie (24, 25) bildet, wobei die Linie (24, 25) entweder in Form einer oder mehrerer - arithmetischen oder logarithmischen - Spirale oder in Form eines oder mehrerer Kreise verläuft und dass die CAD/CAM-Vorrichtung die Teilprothese hinsichtlich ihrer Raumform festlegt, und eine Steuervorrichtung aufweist, die in Abhängigkeit von der erwünschten Größe und Zahnbreite die Teilprothese so in dem Blockpositioniert, und insbesondere auch die individuelle Zahnform, die Rotation und/oder die Angulation der Zähne vorschlägt und - ggf. nach Benutzereingriff - festlegt.

## Claims

1. A block having an upper and a lower surface, which is composed of a flesh-coloured material (10) and a tooth-coloured material (4), wherein the flesh-coloured material (10) and the tooth-coloured material (4) are bonded to one another and wherein the interface (12) between the materials with elevations (32) and depressions (34) formed in or at the interface (12) extends through an optionally curved plane (13), which plane (13) is parallel to or oblique to at least part of the surfaces of the block, **characterised in that** the elevations (32) and depressions (34), as seen in plan view of the interface (12), extend along one or more lines (24, 25) which extend obliquely across the block, and said one or more lines (24, 25) being circular or spiral-shaped.

2. The block according to claim 1, **characterised in that** the one or more lines (24, 25) converge to form a convergence region.

3. A method of producing a partial dental prosthesis, using a CAD/CAM device, from a block which is manufactured with an upper and a lower disc surface and which is composed of a flesh-coloured material (10) and a tooth-coloured material (4), wherein the flesh-coloured material (10) and the tooth-coloured material (4) are bonded to one another and wherein the interface (12) between the materials with elevations (32) and depressions (34) formed in the interface (12) extends through a plane (13), which plane (13) lies parallel or curved or oblique to one of the disc surfaces of the block, **characterised in that** a region is reserved in the block for at least one partial prosthesis, which region extends over one or more elevations (32) and depressions (34), and **in that** the elevations (32) and depressions (34) are each formed, in particular at least partially, circumferentially in the interface (12) between the materials, the apex of each depression (34) and/or elevation (32) forming at least one line (24, 25), the line (24, 25) being circular or spiral-shaped.

4. A method of producing a partial dental prosthesis according to claim 3, **characterized in that** a plurality of partial prostheses, also for different patients, are produced, in particular milled out, from the block, in particular after scanning, virtual creation of the prosthesis and virtual positioning in the block.

5. A method of producing a partial dental prosthesis according to one of claims 3 or 4, **characterized in that** the block has reference points for positioning in the CAD/CAM device and/or an individual identification mark, such as a QR code or an RFID tag, and/or **in that** the control device stores the position of a produced prosthesis for each block and determines a block and/or the positioning on a block for new partial prostheses to be produced, in particular by a "nesting" method, in order to achieve maximum use of raw materials.

6. A method of producing a partial dental prosthesis, using a CAD/CAM device, from a block made with an upper and a lower disc surface, which is composed of a flesh-coloured material (10) and a tooth-coloured material (4), wherein the flesh-coloured material (10) and the tooth-coloured material (4) are bonded to one another and wherein the interface (12) between the materials with elevations (32) and depressions (34) formed in the interface (12) extends through a plane (13), which plane (13) is parallel or curved or oblique to one of the disc surfaces of the block, **characterised in that** a region is reserved in the block for at least one partial prosthesis which extends over one or more elevations (32) and depressions (34), and **in that** the elevations (32) and depressions (34) are each formed, in particular at least partially, circumferentially in the interface (12) between the materials, the apex of each depression (34) and/or elevation (32) forming at least one line (24, 25), the line (24, 25) running either in the form of one or more - arithmetic or logarithmic - spirals or in the form of one or more circles, and **in that** the CAD/CAM device defines the partial prosthesis in terms of its spatial shape, and has a control device which, depending on the desired size and tooth width, positions the partial prosthesis in the block in such a way, and in particular also suggests and - if applicable after user intervention - determines the individual tooth shape, the rotation and/or the angulation of the teeth.

## Revendications

1. Bloc comportant une face supérieure et une face inférieure, constitué d'un matériau de couleur chair (10) et d'un matériau de couleur dentaire (4), où le matériau de couleur chair (10) et le matériau de couleur dentaire (4) sont reliés entre eux et où l'interface (12) entre les matériaux, qui comporte des reliefs (32) et des creux (34) formés dans ou sur l'interface (12), s'étend à travers un plan (13) éventuellement courbé, lequel plan (13) étant parallèle ou oblique par rapport à au moins une partie des faces du bloc, **caractérisé en ce que** les reliefs (32) et les creux (34), vus en vue de dessus de l'interface (12), s'étendent le long d'une ou plusieurs lignes (24, 25) qui traversent le bloc et dont une ou plusieurs (24, 25) sont circulaires ou hélicoïdales.

2. Bloc selon la revendication 1, **caractérisé en ce que** la ou les lignes (24, 25) convergent vers une zone de convergence.

3. Procédé de fabrication d'une prothèse dentaire partielle, utilisant un dispositif de CAO/FAO à partir d'un bloc usiné avec une face supérieure et une face inférieure, constitué d'un matériau de couleur chair (10) et d'un matériau de couleur dentaire (4), où le matériau de couleur chair (10) et le matériau de couleur dentaire (4) sont reliés entre eux et où l'interface (12) entre les matériaux, comportant des reliefs (32) et des creux (34) formés dans ladite interface (12), s'étend à travers un plan (13) qui est parallèle, incurvé ou oblique par rapport à l'une des faces du bloc, **caractérisé en ce qu'**une zone est réservée dans le bloc pour au moins une prothèse partielle, qui s'étend sur une ou plusieurs saillies (32) et creux (34), et **en ce que** les saillies (32) et les creux (34), en particulier au moins en partie, sont formées respectivement de manière périphérique dans l'interface (12) entre les matériaux, ou respectivement le sommet d'un creux (34) et/ou d'une saillie (32) forme au moins une ligne (24, 25), et la ligne (24, 25) est circulaire ou hélicoïdale.

4. Procédé de fabrication d'une prothèse dentaire partielle selon la revendication 3, **caractérisé en ce qu'**à partir du bloc, une pluralité de prothèses partielles, y compris pour différents patients, sont fabriquées, en particulier fraisées et en particulier après une opération de balayage, une conception virtuelle de la prothèse et un positionnement virtuel dans le bloc.

5. Procédé de fabrication d'une prothèse dentaire partielle selon l'une des revendications 3 ou 4, **caractérisé en ce que** le bloc comporte des points de référence pour le positionnement dans le dispositif CAO/FAO et/ou un identifiant individuel, tel qu'un code QR ou une étiquette RFID, et/ou **en ce que** le système de commande enregistre, pour chaque bloc, la position d'une prothèse fabriquée et, pour les nouvelles prothèses partielles à fabriquer, en particulier par un procédé de « nesting », détermine un bloc et/ou le positionnement sur un bloc afin d'optimiser l'utilisation des matières premières.

6. Procédé de fabrication d'une prothèse dentaire partielle, utilisant un dispositif CAO/FAO, un bloc usiné avec une face supérieure et une face inférieure en forme de disque, constitué d'un matériau de couleur chair (10) et d'un matériau de couleur dentaire (4), où le matériau de couleur chair (10) et le matériau de couleur dentaire (4) sont assemblés entre eux et où l'interface (12) entre les matériaux, qui comporte des reliefs (32) et des creux (34) formés dans l'interface (12), s'étendent à travers un plan (13) qui est parallèle, incurvé ou oblique par rapport à l'une des faces du bloc, **caractérisé en ce qu'**une zone qui s'étend sur une ou plusieurs saillies (32) et creux (34) est réservée dans le bloc pour au moins une prothèse partielle, et **en ce que** les saillies (32) et les creux (34), en particulier au moins partiellement, sont formées respectivement de manière périphérique dans l'interface (12) entre les matériaux, où le sommet d'un creux (34) et/ou d'une saillie (32) forme chacun au moins une ligne (24, 25), où ladite ligne (24, 25) s'étend soit sous la forme d'une ou plusieurs spirales arithmétiques ou logarithmiques , soit sous la forme d'un ou plusieurs cercles, et **en ce que** le dispositif de CAO/FAO définit la forme géométrique de la prothèse partielle et comporte un dispositif de commande qui positionne la prothèse partielle dans le bloc en fonction de la taille souhaitée et de la largeur des dents, et propose notamment la forme individuelle des dents, leur rotation et/ou leur angulation, et le définit, le cas échéant, après intervention de l'utilisateur.
